(19)

Europäisches
Patentamt
European
Patent Office
Office européen
des brevets

(11) **EP 3 024 569 B1**

(12) **EUROPEAN PATENT SPECIFICATION**

(45) Date of publication and mention
of the grant of the patent:
**27.02.2019 Bulletin 2019/09**

(21) Application number: **14830227.6**

(22) Date of filing: **22.07.2014**

(51) Int Cl.:
*B23K 26/02* *(2014.01)*    *B23K 26/06* *(2014.01)*
*B23K 26/40* *(2014.01)*    *B29D 11/00* *(2006.01)*
*B23K 26/382* *(2014.01)*    *B23K 26/0622* *(2014.01)*
*B23K 26/361* *(2014.01)*    *B23K 26/53* *(2014.01)*
*B23K 26/55* *(2014.01)*    *B23K 26/352* *(2014.01)*
*B23K 103/08* *(2006.01)*    *B23K 103/10* *(2006.01)*
*B23K 103/14* *(2006.01)*    *B23K 103/16* *(2006.01)*
*B23K 103/00* *(2006.01)*

(86) International application number:
**PCT/CA2014/050694**

(87) International publication number:
**WO 2015/010206 (29.01.2015 Gazette 2015/04)**

(54) **INTERFEROMETRIC LASER PROCESSING**

INTERFEROMETRISCHE LASERBEARBEITUNG

TRAITEMENT INTERFÉROMÉTRIQUE AU LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2013 US 201361857154 P**

(43) Date of publication of application:
**01.06.2016 Bulletin 2016/22**

(73) Proprietors:
• **Kumar, Kitty**
**Cambridge, Massachusetts 02138 (US)**
• **Lee, Kenneth Kuei-ching**
**North York, Ontario M2M 2H5 (CA)**
• **Nogami, Jun**
**Toronto, Ontario M6P 3C7 (CA)**
• **Herman, Peter, R.**
**Toronto, Ontario M5J 2Y2 (CA)**

(72) Inventors:
• **Kumar, Kitty**
**Cambridge, Massachusetts 02138 (US)**

• **Lee, Kenneth Kuei-ching**
**North York, Ontario M2M 2H5 (CA)**
• **Nogami, Jun**
**Toronto, Ontario M6P 3C7 (CA)**
• **Herman, Peter, R.**
**Toronto, Ontario M5J 2Y2 (CA)**

(74) Representative: **Dennemeyer & Associates S.A.
Postfach 70 04 25
81304 München (DE)**

(56) References cited:
**US-A1- 2002 046 994    US-A1- 2005 048 738**

• **KUMAR, K. ET AL.: 'Quantized structuring of
transparent films with femtosecond laser
interference' LIGHT: SCIENCE & APPLICATIONS
vol. 3, 14 March 2014, XP055313172**
• **MCDONALD, J. P . ET AL.: 'Femtosecond- laser
-induced delamination and blister formation in
thermal oxide films on silicon (100' APPLIED
PHYSICS LETTERS vol. 88, 2006, pages 153121-1
- 153121-3, XP012081109**

**Description**

**FIELD**

The present disclosure relates to the field of laser induced modification and processing of materials. Modification is achieved by confining laser-material interaction within an array of narrow zones characterizing an optical interference profile.

**BACKGROUND**

The advent of ultrashort-pulsed lasers has dramatically improved the precision of light-matter interactions owing to greatly reduced thermal degradation[1-3], surface roughness[1] and strong nonlinear optical absorption that are widely studied and exploited today. Inside a transparent medium, such femtosecond and picosecond laser light can be tailored to drive strong nonlinear absorption when confined to a small focal volume created by high numerical aperture (NA) lenses. In the case of a Gaussian shaped laser beam of wavelength, $\lambda$, this focal volume can be narrowed to a beam waist of radius $\omega_o = \lambda/\pi NA$ ($1/e^2$ irradiance) over a short depth of focus of $d_f = \lambda/\pi NA^2$ (Rayleigh range). Multi-photon fluorescence can then be locally excited only from this small focal volume to enable high resolution three dimensional (3D) microscopy of living cells[4] while higher exposure can induce refractive index changes in transparent materials for writing into 3D optical circuits[5] or driving micro-explosions for 3D memory or marking[6, 7].

In a different approach, small sized features on the half-wavelength scale of light can also be recorded inside a material through the interference of light with itself to create highly contrasting interference pattern of optical fringes. Such finely structured light patterns typically induce a gentle material modification that captures or records the optical interference pattern of light with little if any thermal dissipation that would otherwise wash out the process resolution through thermal diffusion in the time scale of the light exposure. Photochemistry is one such benign process that underlies, for example, holographic or volume grating recordings in photographic film, the laser fabrication of Bragg gratings through photosensitive response in the core waveguide of optical silica fiber[8], and the formation of 3D photonic crystals in a four-beam laser interference pattern created inside photoresist[9].

In another high resolution approach, short-pulsed laser light has been transmitted through a thin transparent film to be confined to interact within the thin penetration depth of an underlying silicon substrate[10, 11]. In this approach, the laser interaction zone is significantly reduced from a relatively long depth of focus to a narrow zone confined at the buried interface by a short optical penetration depth in the silicon. The laser dissipation in this thin interaction zone then explodes against the thin film, underpinned by the solid and thick substrate, to enable the formation of thin-film blisters and nano-fluidic networks[12] from the interface at low laser exposure or the precise ejection of the whole film thickness from the interface at higher exposure. This thin-film ejection has promised a wide range of new applications that include patterning and repair in microelectronic circuits, photovoltaic cells[13] and glass display manufacturing. The ejection phenomenon further underlies the driving mechanisms in laser induced forward transfer (LIFT)[14] for printing or additive manufacturing, and cell ejection by laser pressure catapulting[4, 15].

A more challenging concept of laser processing directly within such films, to generate a thin and isolated laser interaction zone away from such an interface, has not been previously reported. A practitioner in the field of laser material processing would expect the laser interaction volume to extend through the full depth of focus, which in the case of the most common thin films would typically extend through the full film thickness. Laser interactions are observed to only narrow to the film interface or surface, formed with other materials such as including a solid substrate, a liquid or solid film coating, or air, vacuum, gases or plasma. Hence, the generation of a thin laser-processing zone within a thin film has not been previously anticipated. Such a thin processing zone therefore defines an unexplored area to create new types of structures in films that could significantly improve the functionality of complementary metal-oxide semiconductor (CMOS), flexible electronic, display, touch-screen, photovoltaic, micro-electro-mechanical (MEM), light emitting diode (LED), optical circuit, lab-on-a-chip devices where thin films are widely deployed during their manufacture.

A practitioner in the field of laser material processing has many well-known means available for manipulating light, such as from a laser, to interfere with itself and form an interference pattern of optical fringes, for example, by using beam splitting and beam combining mirrors or beam-splitting prisms or phase masks or gratings that are instrumental in the examples of holography, fiber Bragg gratings[8] and 3D photonic crystals[9] cited above. In addition to this 'external' form of creating interference patterns, multi-surface Fresnel reflections of laser light inside transparent devices, for example, such as etalons (including thin film), Fabry-Perot cavities, or multi-layered dielectric stacks, are well known to interfere when the interface reflections are sufficiently strong, and create a standing wave interference pattern inside the device. Here, one anticipates fringe maxima spaced by $\lambda/2n_f$ for the case of illumination of transparent film at normal incidence, where $n_f$ is the refractive index of the transparent medium. Hence, optical interference patterns of the laser exposure can be generated externally to a material or device by a beam delivery system, or internally within the material by reflections of the laser from interfaces of the material. In a representative non-limiting example where the transparent device is a transparent film of thickness, $z$, one anticipates at least one fringe maxima to form internally when the film exceeds a quarter wavelength thickness of $\lambda/4n_f$.

In studies of laser damage in transparent film coatings, a lower breakdown threshold for damage in thick single[16, 17] or multilayer[18] dielectric films was observed experimentally. The reduced damage threshold was attributed to a concentration of the nonlinear ultrafast laser interaction at an interface of a film or to an enhanced laser dissipation within the film(s) volume at positions of intensity maxima fringes formed by such internal optical interference[18]. In the latter case of interference, the authors concluded the laser interaction at such intensity maxima fringes would have become diffused over the bulk volume of the film[18]. Hence, a spatially localized laser modification coinciding with the predicted positions of the fringe maxima were not anticipated nor were such thin interaction zones directly observed inside the film layers in this prior work[18]. The possible formation of optical interference fringes were also inferred by Hosokawa and co-workers[19,20] to explain multistep laser etching of Cu-phthalocyanine amorphous films. Here, the laser interaction mechanism was attributed to dissociation of weak intermolecular bonds, a type of photochemistry that would destroy the solid phase of the material at only modest increase in temperature, more similar to a photoresist response than the high temperature interactions in laser ablation. Hence, such fine patterning is not available for the majority of transparent materials such as dielectrics, requiring more aggressive laser interactions than photochemical response or intermolecular bond dissociation.

An expert in the field of laser material processing would understand the existence of a number of factors as contributing to this de-localization of the laser interaction and therefore would not anticipate the formation of a thin laser-processing zone by such interference inside a film. For example, the rapid thermal diffusion of localized heating on such short fringe-to-fringe spacing ($\lambda/2n_f$) over only hundreds of nanometers is anticipated in very short time scales, $\tau_d$

$=\lambda^2/64n_f^2 D$, in the picosecond to nanosecond range, as found by equating the thermal diffusion scale length, $\sqrt{4D\tau_d}$, in a material having thermal diffusivity, $D$, with one-half of the fringe spacing ($\lambda/4n_f$). Hence, the laser dissipation of energy would be expected to spread beyond the fringe-to-fringe separation on a time scale faster than the physical processes evolving during typical laser material modification (i.e. ablation, micromachining, microexplosion) and manifest in material modification extending to size scales larger than the fringe width ($\sim\lambda/4n_f$), and therefore controlled by the larger size of the focused beam volume, namely, the beam waist ($\omega_o$) and depth of focus ($d_f$).

In another example, an expert will understand the fringe intensity contrast or visibility will be blurred and diminished owing to the partial incoherence or large spectral bandwidth typically found in short-pulsed laser light. Fringes will broaden and merge towards a uniform intensity profile when the source bandwidth, $\Delta\lambda_L$, increases to the free spectral range ($\lambda^2/2n_f z$), setting a maximum source bandwidth limit of $\Delta\lambda_L = \lambda^2/2n_f z$, where $z$ is the film thickness. Hence, as one shortens the laser pulse in an attempt to reduce the thermal diffusion scale length, a larger spectral bandwidth will be required according to well known Fourier transform concepts, leading to a spreading and blurring of the fringe intensity contrast. Further, the bandwidth scaling in $\Delta\lambda_L = \lambda^2/2n_f z$ demonstrates the blurring effect to become more pronounced as the thickness of the film, etalon, or Fabry-Perot device increases. A thicker film will therefore require a narrower spectrum light source to maintain fringe visibility, which inherently means an associated longer pulsed laser duration is required due to Fourier transform limits, which thus disadvantageously diffuses the dissipated laser energy to outside the fringe maxima zone. These trends lead to the expectation for uniform laser heating in the film at sufficiently large film thickness.

In another example, an expert in the field will understand that a very low fringe intensity contrast is typically anticipated in transparent films due to modest values of reflection amplitude expected by Fresnel equations at the interfaces of optical materials. One typically finds the different materials in films and substrates to have only a small contrast in their values of refractive index. For the well know case of glass in air, a moderate refractive index difference of $\Delta n = 1.5 - 1.0 = 0.5$ provides only 4% reflectance at a single surface. Such low reflectance leads to formation of only weakly contrasting (85% - 100% modulation) fringes inside the glass that in the case of nonlinear ultrafast laser interactions in the transparent material, would not expect to manifest in confinement of the laser processing volume into single isolated fringes of the optical interference pattern.

Hence, a practitioner in the field of laser material processing that is also familiar with optical interference and laser-interaction physics will not anticipate thin sub-wavelength laser-processing zones to develop internally from interference fringes formed inside the volume of transparent thin or thick films (etalons), and related manifestations where optical interference can arise internally such as in dielectric stacks, oxidized metals, wafers, cylinder or fibers, spherical cavities, Fabry-Perot devices, ring resonators, photonic crystals, metamaterials, Bragg gratings, etc., or where optical interference is provided externally by a beam delivery system.

US2002046994 discloses a laser based etching device.

## SUMMARY

The present disclosure discloses a novel method for highly resolved axial processing inside a thin transparent film on a substrate or freestanding with a femtosecond laser by confining laser-material interaction to an array of narrow zones inside the film. This confinement is anticipated in transparent films of thickness $\geq \lambda/4n_f$, where the optical interference of Fresnel reflections from air-film and film-substrate interface creates a Fabry-Perot intensity modulation of the laser light on $\lambda/2n_f$ fringe spacing. Nonlinear optical interactions by the ultrashort duration laser predicts a strong ionization with an electron density profile to follow the shape of the optical interference pattern, but narrowing into thin (for example, 45 nm thick) plasma disks that are more than 50-fold narrower than the laser depth of focus. At the threshold exposure for internal material structuring, the electron density reaches a critical threshold at the predicted fringe maxima positions to facilitate the quantized ejection of the film or the formation of thin nano-voids inside the film at laser cleaving planes separated periodically on the $\lambda/4n_f$ fringe spacing. This geometry for internal laser cleaving has not been previously reported inside a transparent material and greatly extends the control over the laser modification in contrast with structuring of the film over the whole laser focal volume[7] or structuring confined at a film-substrate interface[12, 21-23]. Further, the predicted plasma disks were shown by intensified CCD imaging to validate the quantized ejection of multiple segments in a temporal sequence. Both internal structuring and quantized ejection of films was observed in 500 - 1500 nm thick films with either uniform or Gaussian beam shape.

A further understanding of the functional and advantageous aspects of the disclosure can be realized by reference to the following detailed description and drawings. The invention is as defined in the appended claims.

## BRIEF DESCRIPTION OF THE DRAWINGS

Embodiments will now be described, by way of example only, with reference to the drawings, in which:

**Figure 1(a)** depicts the division of the focal interaction volume (**18**) of incident laser light (**12**) into thin interaction zones (**24, 26, 28, 30**) located at the fringe maxima inside an optical film (**14**) on a substrate (**16**) as a result of the interference of Fresnel reflections of the incident light (**12**) from the boundary interfaces (**20,22**).

**Figure 1(b)** shows in the immediate aftermath of the laser pulse interaction, the localization of dissipated laser energy into a stacked array of thin disks (**24, 26, 28, 30**) aligned with the high intensity interference zones (**18**) as formed by the Fresnel reflections in **Figure 1(a)**.

**Figure 1(c)** depicts for laser exposure above a threshold for material modification, the opening of film (**14**) by a thin cavity (**32**) at the first interaction interference fringe position ((**24** in **Figure 1(b)**, and commensurate formation of a blister denoted *Segment 1* (**S1**).

**Figure 1(d)** depicts the perforation (**34**) of the blister defined as **S1** in **Figure 1(c)** at a slightly increased laser exposure.

**Figure 1(e)** depicts for a slightly higher laser exposure the opening of film (**14**) by a thin cavity (**36**) at the second interaction interference fringe position (second dark disk (**26**) from top in **Figure 1(b)**)), and commensurate formation of a blister denoted *Segment 2* (**S2**), together with the ejection of the first segment blister (**S1**).

**Figure 1(f)** depicts the perforation (**34**) of the blister defined as **S2** in **Figure 1(e)** at a slightly increased laser exposure.

**Figure 1(g)** depicts for a higher laser exposure the opening of film (**14**) by a thin cavity (**38**) at the third interaction interference fringe position (third dark disk (**28**) from top in **Figure 1(b)**)), and commensurate formation of a blister denoted *Segment 3* (**S3**), together with the ejection of the first (**S1**) and second (**S2**) segment blisters.

**Figure 1(h)** depicts the perforation (**34**) of the blister defined as **S3** in **Figure 1(g)** at a slightly increased laser exposure.

**Figure 1(i)** depicts for a higher laser exposure the opening of a thin cavity (**40**) at the interface (**22**) of the film (**14**) and substrate (**16**), and commensurate formation of a blister denoted *Segment 5* (**S5**), together with the ejection of the first (**S1**), second (**S2**), third (**S3**) and fourth (**S4**) segment blisters driven from the respective first (**24**), second (**26**), third (**28**), and fourth (**30**) interaction interference fringe positions (first to fourth darks disks from top in **Figure 1(b)**).

**Figure 1(j)** depicts the perforation (**34**) of the blister defined as **S5** in **Figure 1(i)** at a slightly increased laser exposure.

**Figure 1(k)** depicts the ejection of all segments (**S1, S2, S3, S4, S5**) at a slightly increased laser exposure, forming a 'blind via' (**42**) fully through the optical film (**14**) to the underlying substrate (**16**).

**Figure 2(a)** depicts the division of the focal interaction volume of incident 522 nm laser light (**12**) into thin interaction zones (**24, 26, 28, 30**) inside a 500 nm thick SiN$_x$ film (**14**) on a silicon substrate (**16**) as a result of the interference of Fresnel reflections of the incident light from the boundary interfaces (**20, 22**).

**Figure 2(b)** shows the modulated intensity profile (**44**) calculated for a Gaussian-shaped beam of 0.495 $\mu$m (1/e$^2$) radius together with the electron density profile (**50**) expected inside the film at the threshold exposure of $9 \times 10^{12}$ W/cm$^2$ average incident intensity for 200 fs pulse duration. The electron density exceeds the critical plasma density

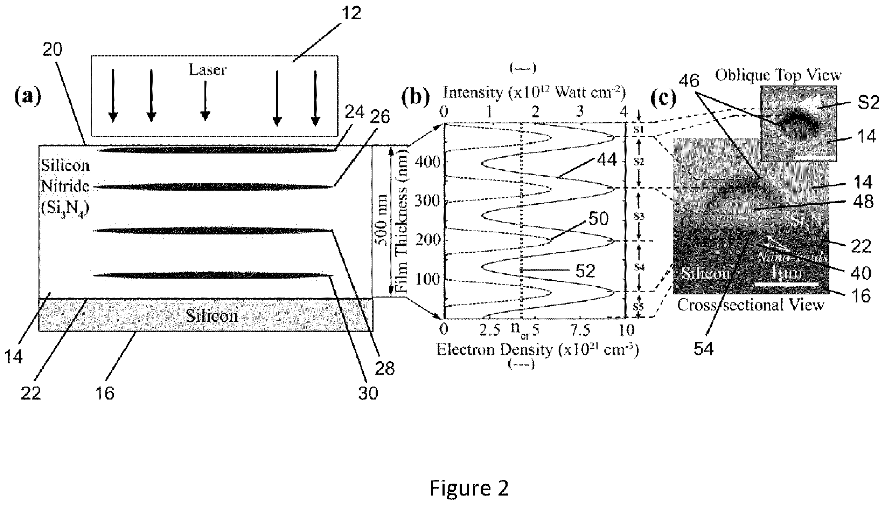

($n_{cr}$) (**52**) at the fringe maxima positions (**24, 26, 28, 30**) that manifests in the internal structuring of the film observed in cross-sectional and oblique top SEM views in **Figure 2(c)**.

**Figure 2(c)** shows the internal structuring of the film (**14**) observed in cross-sectional and oblique top SEM views following the laser exposure condition of **Figure 2(b)**. The near-threshold intensity results in the ejection of segments **S1** (not visible) and **S2** (partial) and blistering of fused segments **S3** and **S4** (**48**) to form a nano-void at the fourth fringe maximum (**54**), and blistering of **S5** overlying a second nanovoid (**40**) at the silicon and SiN$_x$ interface. The positions of the cleavage planes identified herein (c) align with the fringe maxima positions in **Figure 2(b)** as depicted by the connecting **dashed lines**.

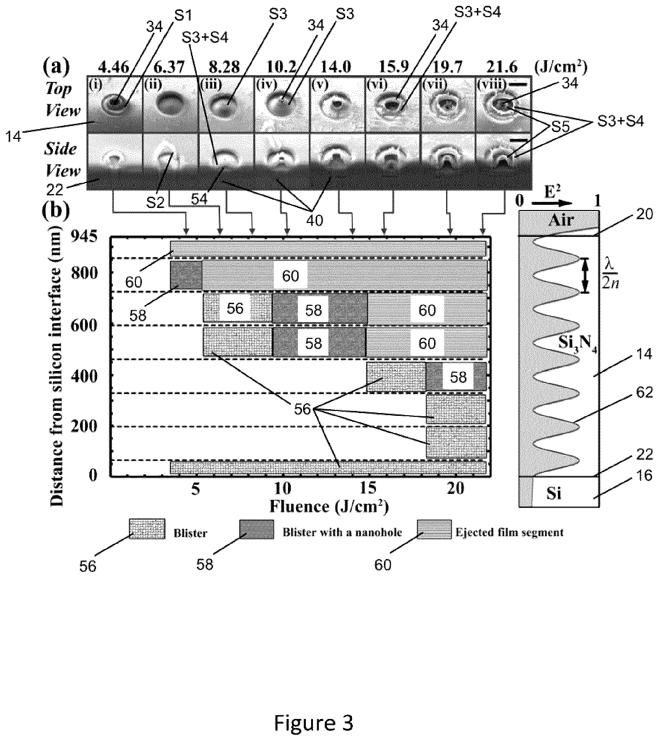

**Figure 3** shows the quantized ejection of single or multiple segments in a 945 nm thick SiN$_x$ film as observed with increasing fluence for a Gaussian-shaped beam to a large fluence of 21.65 J/cm$^2$, shown in top and cross-sectional SEMs **(a) (i-viii)**. Slightly above threshold exposure at 4.46 J/cm$^2$ fluence **(a (i))**, *1st and 2nd segments* (**S1** and **S2**) are ejected and blistered, respectively, and damage (**40**) is noted at the SiN$_x$-silicon interface (**22**). The sequence of blistering, puncturing and ejection of each segment with increase in laser fluence is summarized graphically in **(b)** by the threshold fluences observed to form a solid blister (**56**) a punctured blister (**58**) and an ejected blister segment (**60**). Each segment was found to align between the cleavage planes (**horizontal dashed lines**) predicted by the positions of the Fabry-Perot intensity maxima shown graphically on the right on $\lambda/2n_f$ fringe spacing.

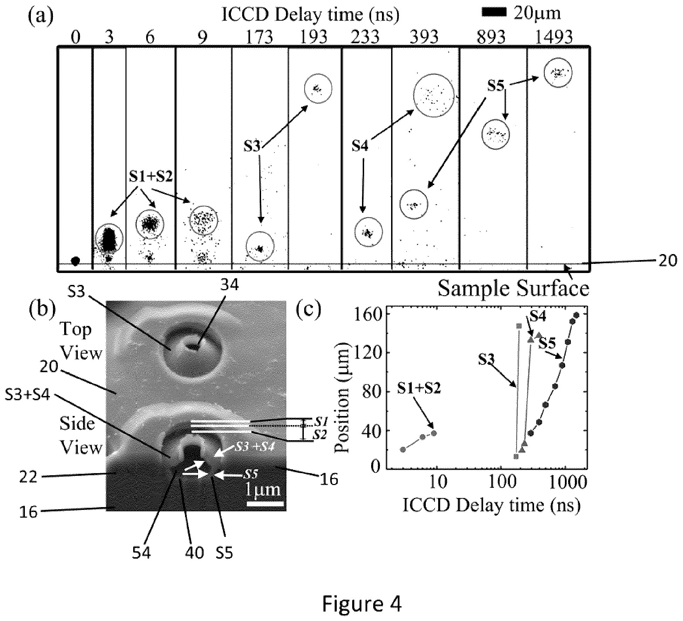

**Figure 4** shows a representative example of time-resolved ICCD optical camera images **(a)** of ablation plumes recorded transversely from a 500 nm thick SiN$_x$ film exposed to 13.67 J/cm$^2$ fluence and the top and cross-sectional SEM images **(b)** of the film after exposure. The plume emissions **(a)** appear in several clusters associated with the ejection of segments **S1** and **S2** in the 3 - 9 ns window, partial ejection of **S3** and **S4** in the 173 - 193 ns and 233 - 393 ns windows, respectively, and ejection of **S5** in the 393 - 1493 ns windows. A more comprehensive range of data in **(c)** presents the observed position of the cluster groups from the surface as a function of time.

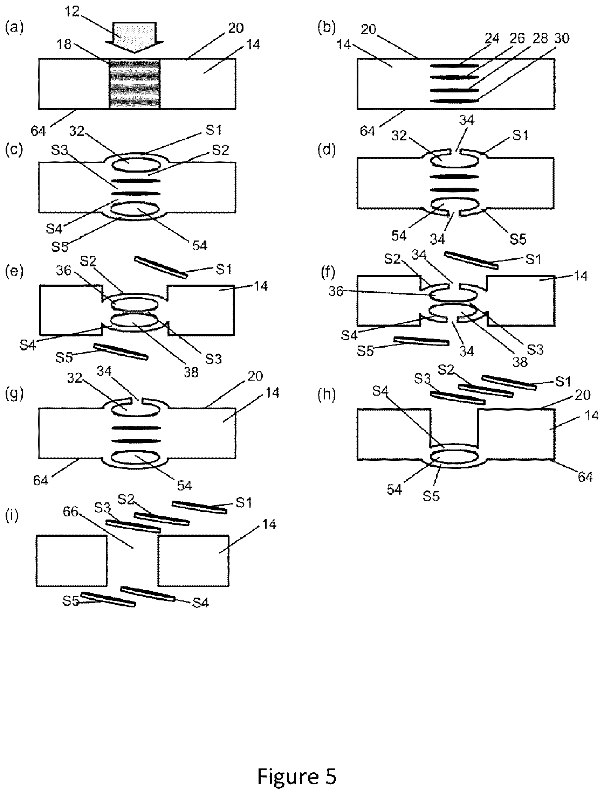

**Figure 5(a)** depicts the division of the focal interaction volume of incident laser light (**12**) into thin interaction zones (fringe pattern) (**18**) inside a free standing transparent film (**14**) as a result of the interference of Fresnel reflections of the incident light from the boundary interfaces (**20, 64**).

**Figure 5(b)** shows, in the immediate aftermath of the laser pulse interaction, the localization of dissipated laser energy aligned with the high intensity interference zones (**24, 26, 28, 30**) as formed by the Fresnel reflections in **Figure 5(a).**

**Figure 5(c)** depicts for laser exposure above a threshold for material modification, the opening of film (**14**) by two thin cavities (**32, 54**) at the first and last interaction interference fringe position (topmost (**24**) and bottommost (**30**) dark disks in **Figure 5(b)**), and commensurate formation of two blisters on the opposite surfaces denoted as *Segments 1* (**S1**) and *5* (**S5**).

**Figure 5(d)** depicts the perforation (**34**) of the blisters defined as **S1** and **S5** in **Figure 5(c)** at a slightly increased laser exposure.

**Figure 5(e)** depicts for a slightly higher laser exposure the opening of film (**14**) by two thin cavities (**36, 38**) at the second and third interaction interference fringe position (second (**26**) and third (**28**) dark disks from top in **Figure 5(b)**), and commensurate formation of two blisters denoted *Segments 2* (**S2**) and *4* (**S4**), together with the ejection of the first segment blister (**S1**) and fifth segment blister (**S5**).

**Figure 5(f)** depicts the perforation (**34**) of the blisters defined as **S2** and **S4** in **Figure 5(e)** at a slightly increased laser exposure.

**Figure 5(g)** depicts an asymmetric processing on the two surfaces (**20, 64**) at a laser exposure similar to the condition in **Figure 5(c)** or **5(d)**, where the opening of film (**14**) by two thin cavities (**32, 54**) at the first and fourth interaction interference fringe position (first (**24**) and fourth (**30**) dark disks from top in **Figure 5(b)**) is followed by formation of a perforated (**34**) blister denoted *Segment 1* (**S1**) at the first surface (**20**) and formation of a closed blister denoted *Segment 5* (**S5**) at the second surface (**64**).

**Figure 5(h)** depicts an asymmetric processing for higher laser exposure, where the opening of film (**14**) by a single thin cavity (**54**) at the fourth interaction interference fringe position (fourth dark disk (**30**) from top in **Figure 5(b)**) is followed by formation of a closed blister denoted *Segment 4* (**S4**) at the first surface (**20**) and formation of a closed blister denoted *Segment 5* (**S5**) at the second surface (**64**), together with the ejection of the first (**S1**), second (**S2**), and third (**S3**) segments.

**Figure 5(i)** depicts the ejection of all segments in the free standing transparent film (**14**) at a high laser exposure, driven from the first, second, third, and fourth interaction interference fringe positions (all darks disks (**24, 26, 28, 30**) in **Figure 5(b)**) and leading to opening a through via (**66**) in the transparent film (**14**).

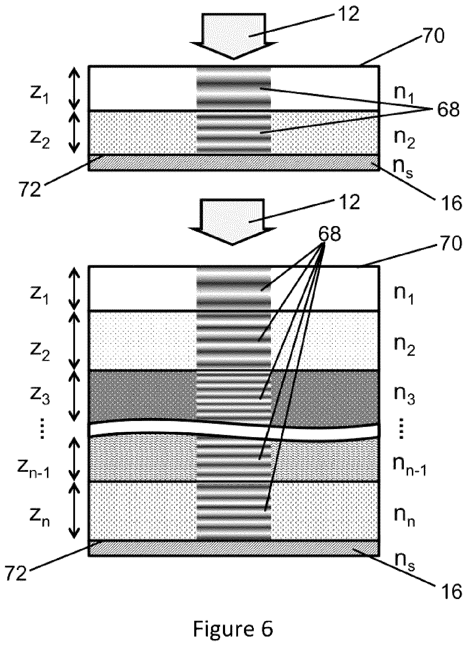

**Figure 6** depicts two layer (top) and multi-layer (bottom) coatings of transparent films of refractive index value, $n_j$, and thickness, $z_j$, defined for a layer j, over a substrate (**16**) where the division of the focal interaction volume of incident laser light (**12**) into thin interaction zones (fringe patterns) (**68**) follows as a result of the interference of Fresnel reflections of the incident light (**12**) from the many boundary interfaces with fringe-to-fringe spacing given by $\lambda/2n_j$ in each layer.

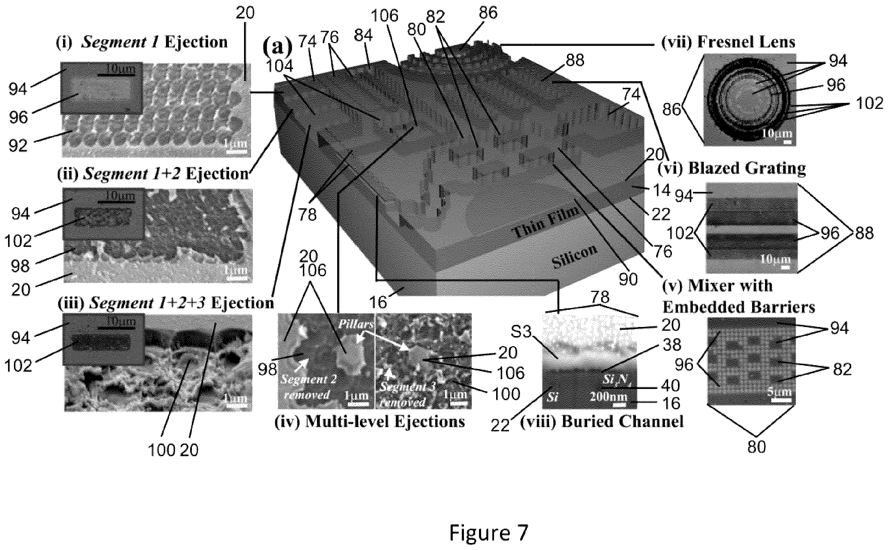

**Figure 7** is a schematic of a multifunctional device design consisting of combinations of optical, nanofluidic, and MEMs components over a large area together with SEM (gray) and optical (color) images of sample components constructed inside a film by interferometric laser processing. Representative examples in a 500 nm thick SiNx film on a silicon substrate follow in (i) to (viii). Uniform ejection of **S1** (**92**) (i), **S2** (**98**) (ii), or **S3** (**100**) (iii) segments over a large area by raster scanning a top hat laser beam profile that represent formation of single level reservoirs (**74**) and open serpentine channels (**84**). The film color in the **S1**, **S2** and **S3** ejection zones was shifted from green (**94**) to red (**96**) (inset image in (i)) to grey (**102**) (insets in (ii) and (iii)). Different fringe-level ejections can also be combined (iv) to create multi-level reservoirs (**104**), mixing channels (**80**) with pillars (**82**) (v), and optical components such as a blazed grating (**88**) (vi) and a Fresnel lens (**86**) (vii). Nano-cavities (**38**) at the third Fabry Perot fringe position were stitched together and opened (viii) to represent the writing of buried nanofluidic channels (**78**) or a large area membrane. Alternatively, a large area membrane structure (**90**) is anticipated with exposure of the film (**14**) by a large laser beam diameter.

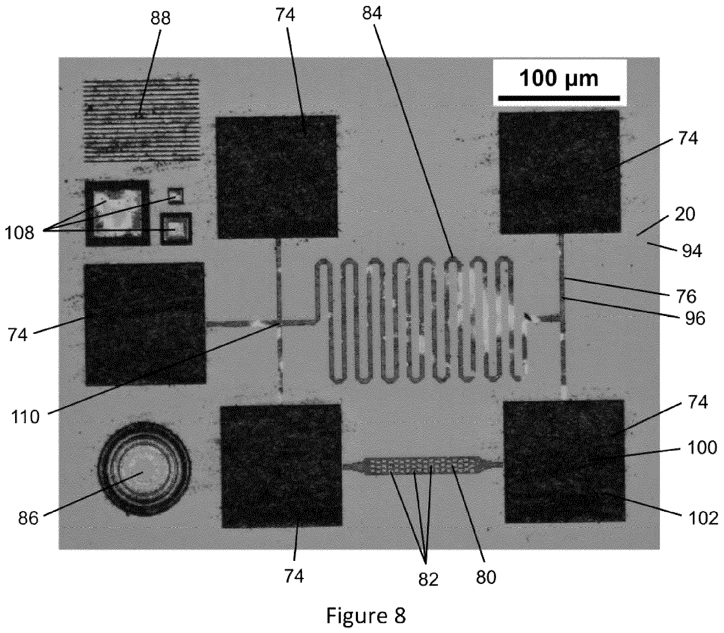

**Figure 8** shows an optical image of a multi-component device in a 500 nm thick SiN$_x$ film over a silicon substrate showing a Fresnel lens (**86**), blazed grating (**88**), single (**74**) and multilevel (**108**) reservoirs, and open serpentine (**84**), crossed (**110**) and mixing (**80**) channels, fabricated with interferometric laser ejection.

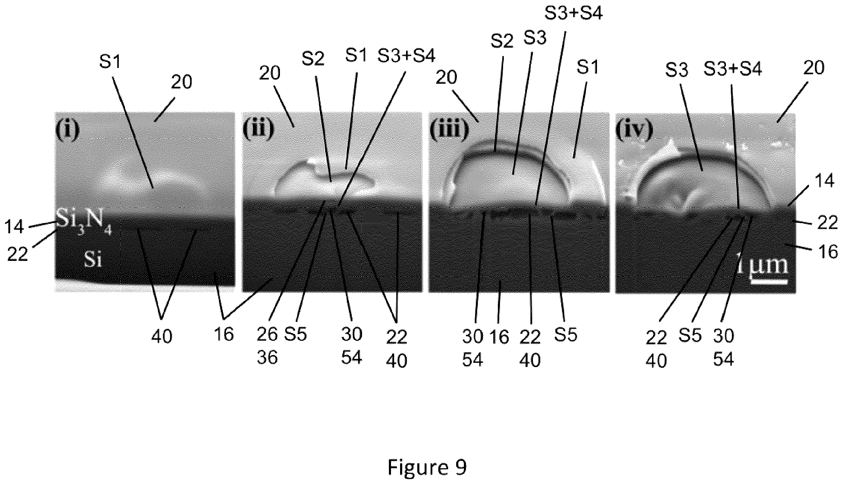

**Figure 9** shows cross-sectional SEM views of a 500 nm thick SiN$_x$ film (**14**) over a c-silicon substrate (**16**) exposed to a top-hat beam profile for fluences of **(i)** 93.5 mJ/cm$^2$, **(ii)** 140.2 mJ/cm$^2$, **(iii)** 303.8 mJ/cm$^2$, and **(iv)** 436.2 mJ/cm$^2$. The threshold fluence of 93.5 mJ/cm$^2$ shows **(i)** the onset of blistering for the first ∼ 29 nm thick segment (**S1**) of the film (**14**), which is seen ejected at the higher fluence exposure in **(ii)**. *Segment 1* (**S1**) and *2* (**S2**) are both removed at the higher fluences as shown in **(iii)** and **(iv),** yielding a more uniform underlying morphology (**S3**) in contrast with the case of Gaussian beam exposure shown in **Figures 2** to **4.**

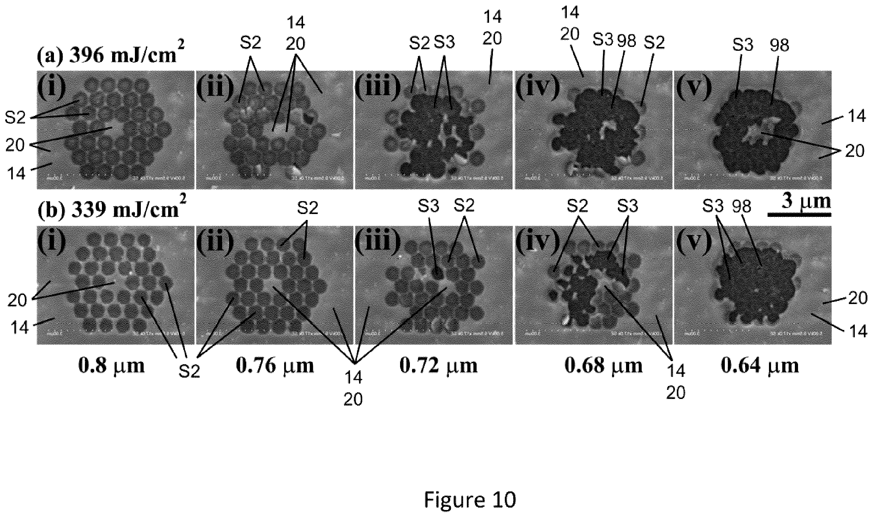

**Figure 10** shows SEM images of 500 nm thick SiN$_x$ film (**14**) over a c-silicon substrate after exposure with approximately uniform-square beam profile of 396 mJ/cm$^2$ (a) and 339 mJ/cm$^2$ (b) fluence on hexagonal patterns varying with spot-to-spot offsets from 0.64 to 0.8 $\mu$m in **(i) - (v),** respectively.

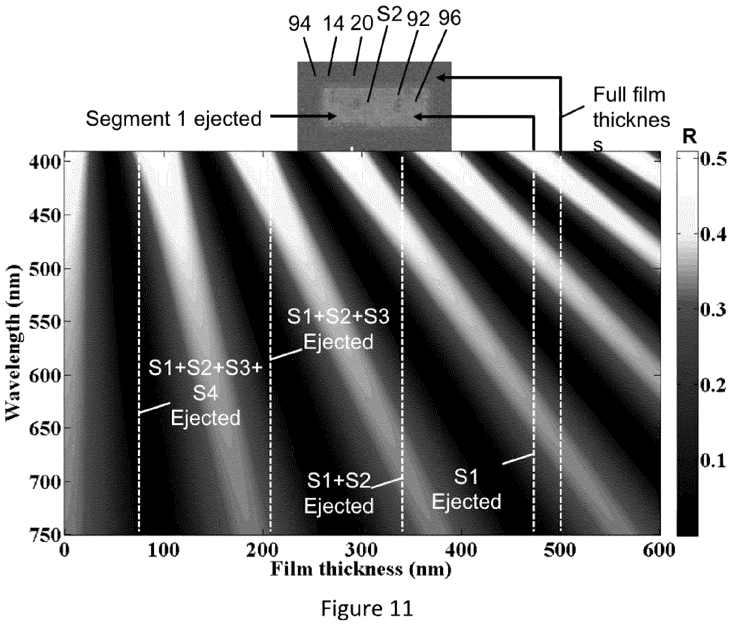

**Figure 11** shows spectral reflectance at normal incidence calculated as a function of SiN$_x$ film (**14**) thickness on a c-silicon substrate. Vertical dashed lines highlight the reflectance spectrum expected at 500 nm (full film thickness) and 471 nm (film thickness after ejection of the first segment (**S1**)) film thickness, predicting the **green (94)** (508 nm wavelength) to **red** (96) (632 nm wavelength) shift on the brightest fringe observed by eye with visible light illumination as observed under an optical microscope (inset).

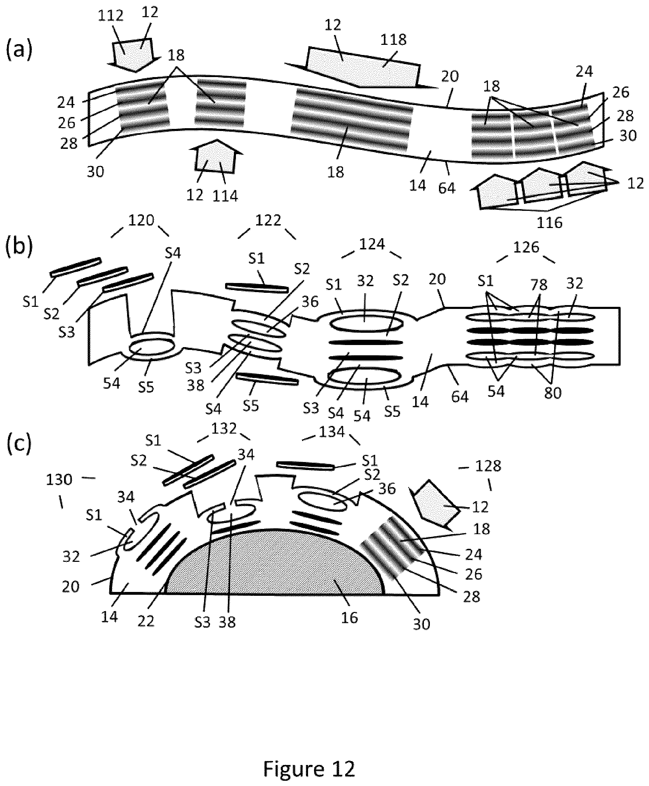

**Figure 12(a)** depicts the division of the focal interaction volume of incident laser light (**12**) into thin interaction zones (**24, 26, 28, 30**) (fringe pattern (**18**)) inside a flexible or curved free standing transparent film as a result of the interference of Fresnel reflections of the incident light (**12**) from the boundary interfaces (**20, 64**), for cases of a small diameter laser beam irradiating the top surface (**112**) or the bottom surface (**114**), multiple laser pulses irradiating adjacent positions in time sequence or simultaneously at a bottom surface (**116**), or a large area laser beam irradiating a top surface (**118**).

**Figure 12(b)** depicts, in the aftermath of the laser pulse interaction, the localization of dissipated laser energy aligned with the high intensity interference zones as formed by the Fresnel reflections in **Figure 12(a)**, that lead to formation of various symmetric or asymmetric structures on the top (**20**) and bottom (**64**) surfaces: (1) asymmetric opening of film (**120**) by a thin cavity (**54**) at the last interaction interference fringe position ((**30** in **Figure 12(a)** for (**112**)), ejection of the first three segments (**S1, S2, S3**) and commensurate formation of two blisters on the opposite surfaces denoted as *Segments 4* (**S4**) and *5* (**S5**); (2) symmetric opening of film (**122**) by two thin cavities (36, 38) at the second and third interference fringe position ((**26, 28** in **Figure 12(a)** for (**114**)), ejection of the first (**S1**) and last (**S5**) segments, and commensurate formation of two blisters on the opposite surfaces denoted as *segments 2* (**S2**) and *4* (**S4**); (3) symmetric opening of film (**124**) over large area with a large area laser beam by two thin cavities (**32, 54**) at the first and last interference fringe positions ((**24, 30** in **Figure 12(a)** for (**118**)), and commensurate formation of two blisters on the opposite surfaces denoted as *segments 1* (**S1**) and *5* (**S5**); and (4) symmetric opening of film (**126**) over large area with adjacent laser pulses into two thin cavities (**32, 54**) at the first and last interference fringe positions ((**24, 30** in **Figure 12(a)** for (**116**)), and commensurate formation of an array of connected blisters denoted as *Segments 1* (**S1**) and *5* (**S5**) over an open and connected array of cavities (**32**, **54**) on each of the opposite surfaces to define connected buried nanochannels (**78**) or cavities.

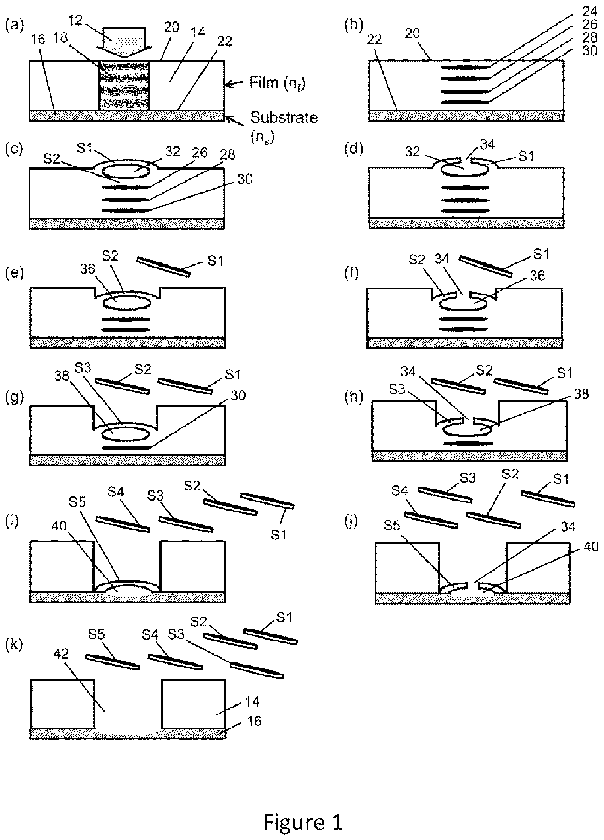

**Figure 12(c)** depicts (**128**) the division of the focal interaction volume of incident laser light (**12**) into thin interaction zones (**24, 26, 28, 30**) (fringe patterns (**18**)) inside an optically transparent film (**14**) conforming to a curved, spherical, cylindrical, or non-planar substrate (**16**), as a result of the interference of Fresnel reflections of the incident light from the curved boundary interfaces (**20, 22**), together with examples in the aftermath of the laser pulse interaction, showing the formation of a perforated (**34**) blister (**130**), the ejection of first (**S1**) and second segments (**S2**) (**132**) commensurate with formation of a perforated (**34**) blister at the third segment (**S3**), and ejection of the first segment (**S1**) (**134**) commensurate with the formation of a closed blister at the second segment (**S2**), defining analogous representations of the structures shown in **Figures 1(d)**, **1(h)**, and **1(e)**, respectively.

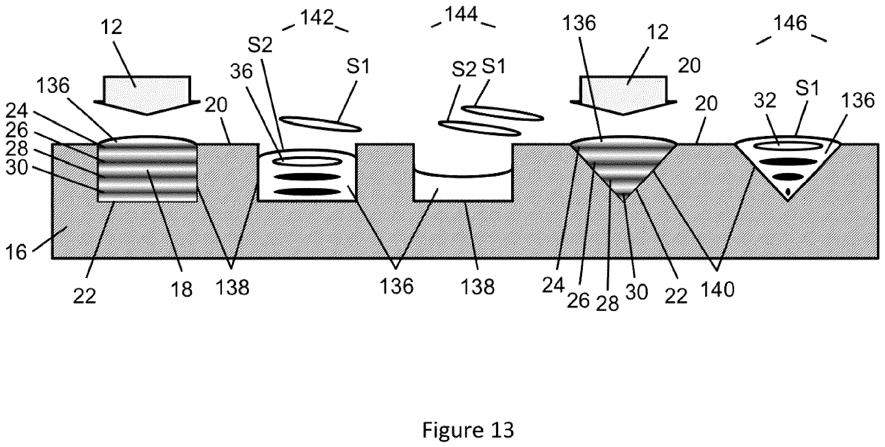

**Figure 13** depicts the division of the focal interaction volume of incident laser light (**12**) into thin interaction zones (**24, 26, 28, 30**) (fringe patterns (**18**)) inside a transparent liquid or gel or material (**136**) filling a well or channel (**138**) or reservoir or v-channel (**140**) in a substrate (**16**) as a result of the interference of Fresnel reflections of the incident light (**12**) from the boundary interfaces (**20, 22**). In the immediate aftermath of the laser pulse interaction are shown the localization of dissipated laser energy aligned with the high intensity interference zones as formed by the Fresnel reflections above a threshold for material modification, together with the following depictions: (1) the opening of the liquid or gel (**142**) by a thin cavity (**36**) at the second interaction interference fringe position (**26**), and commensurate ejection of a controlled volume of liquid or gel (**136**) arising from a volume *segment 1* (**S1**); (2) the ejection of a two controlled volumes of liquid or gel (**144**) arising respectively from two volumes in the well denoted as *Segment 1* (**S1**) and *2* (**S2**); and (3) the opening of the liquid or gel (**146**) by a thin cavity (**32**) at the first interaction interference fringe position (**24**) for the liquid or gel (**136**) in the V-shaped channel (**140**) configured to form interference fringes (**18**).

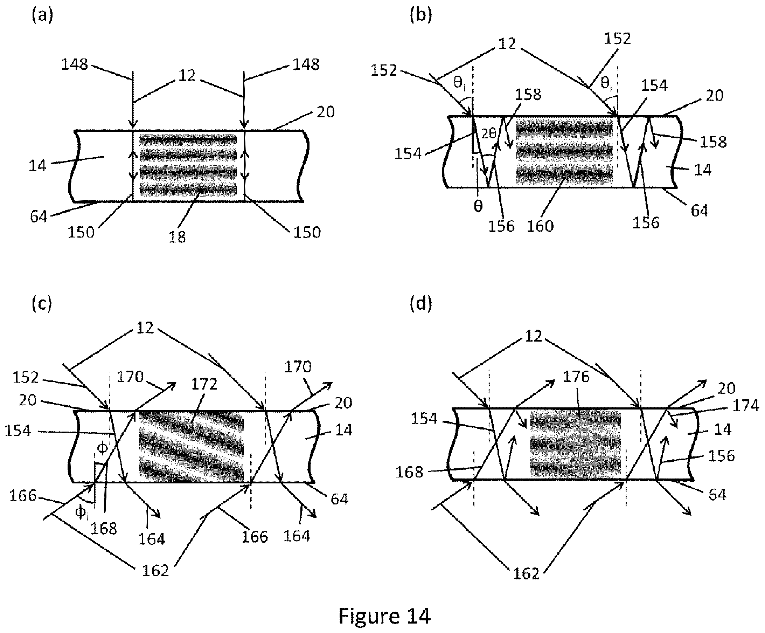

**Figure 14(a)** is similar to **Figure 5a**, depicting the division of the focal interaction volume of incident laser light (**12**) into thin interaction zones formed on the fringe pattern (**18**) inside a free standing transparent film (**14**) as a result of the interference of Fresnel reflections of the incident light from the boundary interfaces (**20, 64**). Optical ray trajectories (**148**) of the incident light at normal incidence with the first interface (**20**), are shown refracted and then multi-reflected (**150**) inside the film (**14**) due to internal Fresnel reflections at normal incidence to the boundary interfaces (**20, 64**), and leading to fringe to fringe spacing of $\lambda/2n_f$ and fringes parallel with the boundary interfaces (**20, 64**).

**Figure 14(b)** is similar to **Figure 14(a)**, with the laser beam (**12**) now depicted arriving from a different angle, with corresponding optical ray trajectories (**152**) that are incident at angle $\theta_i$ with respect to the interface (**20**) normal (**dashed lines**). Following refraction at the first interface (**20**), the internal refracted optical rays (**154**) are then multi-reflected (**156, 158**) inside the film (**14**) due to Fresnel reflections at the boundary interfaces (**20, 64**), propagating at the refraction angle, $\theta$, with respect to the interface (**20, 64**) normals (**dashed lines**), and leading to a modified interference pattern (**160**) with fringe to fringe spacing of $\lambda/2n_f\cos\theta$ while retaining interference fringes aligned parallel with the boundary interfaces (**20, 64**).

**Figure 14(c)** has the same elements of **Figure 14(b),** with a second laser beam (**162**) now depicted arriving from below the film (**14**) at a different angle, with corresponding optical ray trajectories (**166**) that are incident at angle $\phi_i$ with respect to the interface (**64**) normal (**dashed lines**). Following refraction from the bottom interface (**64**), the internal refracted optical rays (**168**) propagate at the refraction angle, $\phi$, with respect to the interface (**20, 64**) normals (**dashed lines**), to intercept and refract at the top interface (**20**), and exit the film (**14**) as transmitted optical rays (**170**). In the case of low Fresnel reflections at one or both of the interface boundaries (**20, 64**), the weak internal multi-reflections will result in only weakly contrasting and low visibility interference fringes to form by self-interference from either of the incident beams from below (**162**) or above (**12**) the film (**14**). Nevertheless, the free standing transparent film (**14**) depicts the formation of a modified focal interaction volume, in the region of overlapping incident laser light beams (**12, 162**), into thin interaction zones formed on the fringe pattern (**172**) inside the film (**14**) as a result of the interference of two laser beams (**12, 162**) for the case where these two beams are made coherent with each other, for example, by using an external beam-splitting optical beam delivery system. For this case where the optical interference pattern is created externally, without influence of significant internal interface boundary reflections, the optical interference pattern (**172**) is modified from the cases of **Figures 14(a)** and **(b)**, showing fringe to fringe spacing of $\lambda/2n_f\cos[(\theta+\phi)/2]$ and a rotation of the interference fringes by angle $(\theta-\phi)/2$ with to respect to the boundary interfaces (**20, 64**).

**Figure 14(d)** combines the elements of **Figures 14(b)** and **(c)**, depicting the division of the focal interaction volume of two overlapping incident beams of laser light (**12, 162**) for the case of their mutual coherence, into an two-dimensional array of interaction zones formed on the fringe pattern (**176**) inside a free standing transparent film (**14**) as a result of the interference of the Fresnel refractions (optical rays (**154, 168**)) and reflections (optical rays (**156,174**)) of the incident light from the boundary interfaces (**20, 64**). This two dimensional optical interference pattern may be further considered to arise from the bases of four in-plane light beams with optical ray trajectories (**154, 156, 168, 174**) that combine the elements of interference created externally (**172**) by the two coherent beams (**12**) and (**162**) and created internally (**160**) by the Fresnel reflections of the interface boundaries (**20, 64**).

## DETAILED DESCRIPTION

Various embodiments and aspects of the disclosure will be described with reference to details discussed below. The following description and drawings are illustrative of the disclosure and are not to be construed as limiting the disclosure. The drawings are not necessarily to scale. Numerous specific details are described to provide a thorough understanding of various embodiments of the present disclosure. However, in certain instances, well-known or conventional details are not described in order to provide a concise discussion of embodiments of the present disclosure.

**Definitions:**

As used herein, the terms, "**comprises**" and "**comprising**" are to be construed as being inclusive and open ended, and not exclusive. Specifically, when used in this specification including claims, the terms, "comprises" and "comprising" and variations thereof mean the specified features, steps or components are included. These terms are not to be interpreted to exclude the presence of other features, steps or components.

As used herein, the term "**exemplary**" or "**example**" means "serving as an example, instance, or illustration," and should not be construed as preferred or advantageous over other configurations disclosed herein.

The present invention takes advantage of the strong absorption available from short-pulsed laser light, including the possible nonlinear optical interaction within the medium, to proceed faster than thermal transport and diffusion and enable a strongly localized laser-interaction within zones that follow the optical interference fringes of maximum intensity. The optical interference may be generated 'internally', meant here to form as a result of multiple reflections of the laser light source from interface boundaries within the material when irradiated by the laser. Two non-limiting examples of such internally generated interference patterns (**18, 160**) are depicted inside the film (**14**) of **Figures 14(a)** and **(b)** for an incident laser beam (**12**) presented at two different angles of incidence, $\theta_i = 0$ and $\theta_i \neq 0$, respectively.

The optical interference may alternatively be generated 'externally', meant here to form as a result of two or more incident laser beams that are focused or projected into the material to overlap, and thus interfere to form a fringe pattern inside the material when the sources are sufficiently coherent with each other. A non-limiting example of such an externally generated interference pattern (**172**) is depicted inside the film (**14**) in **Figure 14(c)**, arising from two coherent light beams incident at angles, $\theta_i$ and $\phi_i$, refracting into the film at angles, $\theta$ and $\phi$, and thus creating optical interference fringes (**172**) where they overlap.

A practitioner in the field of optics will be well versed in many methods available for creating such 'external' optical interference with two or more optical beams, for example, by using beam splitting and beam combining mirrors or beam-splitting prisms or phase masks or gratings, as well as double or multiple slits, as non-limiting examples.

The present invention also anticipates the formation of interference fringes inside a material by a combination of the stated 'internal' and 'external' methods of optical interference. In a non-limiting example, the splitting of a laser beam to result in two coherent beams (**12, 162**) incident on a free standing film (**14**) at angles, $\theta_i$ and $\phi_i$, will undergo 'external' interference in their overlapping volume, while these internal light rays (**154, 168**) further undergo internal Fresnel reflections (**156, 174**) at the boundary interfaces (**20, 64**) to introduce a component of 'internal' interference, collectively creating a two-dimensional optical interference pattern (**176**) as depicted in **Figure 14(d).**

More generally, the present invention relies on 'external' and/or 'internal' methods of optical interference to form fringe patterns of light that may be characterized as structured periodically in one, two or three dimensions. As a non-limiting example, a one-dimensional fringe pattern may be created 'externally' by two overlapping coherent laser beams, for example, as provided in a Fabry Perot resonator or in the near-field of a one-dimensional transmission phase mask. In another non-limiting example, a one-dimensional fringe pattern may be created 'internally' in a material such as a free standing thin film by the interference of Fresnel reflections of an incident light beam (**12**) from the boundary interfaces (**20, 64**) as depicted in **Figures 14 (a)** or **(b)**. In a non-limiting example, a two dimensional optical interference pattern may be created with a minimum of three co-planar optical beams that are mutually coherent and propagating at different angles. These beams may be generated 'externally', for example, by 2 sets of beam splitting optics, or 'internally' within the material by the combination of reflections from three non-parallel interface boundaries such as in a triangular prism, or alternatively, by a combination of 'internal' and 'external' generation as depicted in **Figure 14 (d)**. In a non-limiting example, a three dimensional optical interference pattern maybe be created with the addition of a fourth optical beam that is coherent but not coplanar with the first three optical beams. Such four-beam optical interference maybe be generated 'externally', for example, by 3 sets of beamsplitters and combining mirrors, or may be generated 'internally' in a material, for example, by the combination of internal Fresnel reflections from interface boundaries of a three-dimensional material object such as a triangular pyramid, or combinations of such 'external' and 'internal' interference.

The present invention anticipates numerous methods for creating such one-, two-, and three-dimensional optical interference patterns in all 'external' or all 'internal' or their combined manifestations. These methods of interference are well known to a practitioner in the field of optics. Further, optical theories and simulation tools are well established for a practitioner to calculate in detail the optical interference and determine the anticipated position of fringes, their shape and their visibility for all considerations of one-two, and three-dimensional interference arising separately or in combination of the 'external' and 'internal' manifestations here. This may require solving scalar or vector solutions to Maxwell's wave equations, or using computation tools for Finite-Difference Time-Domain calculations. For 'internal' interference, there is a related vast literature and resources available that provide well known solutions for calculating the light intensity patterns generated inside a material by internal reflections from the interface boundaries, as well as consideration of other optical scattering or reflecting structures embedded therein, when a light source is incident on the material often noted as an optical resonator device. Hence, a thin film compact disk, a silicon wafer, a glass fiber, a plastic prism, and a water droplet are non-limiting examples of such optical resonators that entail one or more dimensions of optical interference. More generally, the present invention anticipates any shape of material that also offers sufficient optical transmission over its physical size to be considered an optical resonator capable of forming internal optical interference patterns with an incident light beam or beams.

In a non-limiting example, a detailed examination of the optical and material interactions of a short duration laser light beam is examined when focused onto a thin optical film coated over an opaque substrate. A Fabry-Perot interference pattern is anticipated to form in the film, arising from multiple Fresnel reflections of the laser beam with the interface boundaries (air and substrate). The invention anticipates thin laser-interaction disks to form and align with intensity maxima of such optical fringes, and facilitate material modification inside the film volume at a length scale much smaller than the focal Rayleigh range. The laser interaction volume was physically examined and found to follow the laser focal volume, but divided advantageously into an array of thin axial planes that align with the Fabry-Perot fringe maxima inside the film. We show that this novel localized interaction can be controlled by the laser properties and focusing geometry to modify the film interior periodically, or at a single fringe maximum position in the case of a thin film, and thereby open internal nano-voids or nano-disks, create closed or perforated blisters, or enable quantized ejection of partial film disks, in all cases involving film segments in multiples of $\lambda/2n_f$ thickness or a fraction thereof when formed adjacent to the first or second film interface.

For irradiation with a single laser pulse, the sequential delayed ejection of disks according to the segment depth was verified by time-resolved imaging of the ablation plume with an intensified CCD (ICCD) camera as shown in **Figure 4.** Further, the varying interactions and outcomes, seen for example in **Figure 3(a)**, enable the fabrication of 3D nanofluidic structures inside the thin film while the quantized surface structuring defines a new approach for creating thin film membranes, coloring of film, internal labeling or multilevel surface structuring. Together the nano-voids and quantized ejection are attractive for structuring thin films such as widely used in CMOS wafer and many other manufacturing processes that promise to improve the functionality of microelectronic, photonic, MEMS, optofluidic and sensor devices as well as opening new directions for developing flexible electronic or display films or new lab-in-a-film concepts.

In an aspect of the invention shown in **Figure 1**, laser light **(12)** entering a thin transparent film **(14)** of thickness greater than $\lambda/4n_f$ coated over a substrate **(16)** will lead to formation of a Fabry-Perot interference pattern **(18)** owing to Fresnel reflections and transmissions at the air-film **(20)** and the film-substrate **(22)** interface. The resulting fringe pattern and contrast can be controlled as well know to a practitioner in the field of optics by tailoring the refractive index of the film and substrate through appropriate material selection.

**Figure 1(a)** depicts such a transparent film **(14)** of refractive index, $n_f$, coated over a substrate **(16)** of refractive index, $n_s$. A focused laser beam **(12)** on entering the film (14) from above undergoes Fresnel reflections at the first (air-film) **(20)** and second (film-substrate) **(22)** boundary interfaces to lead to the division of the focal interaction volume of incident laser light into thin interaction zones (fringe patterns) as depicted inside the film **(18)**, arising as a result of the interference of both upward and downward propagating laser beams in the film **(14)**. The fringe maxima **(18)** extend across the laser beam diameter and following parallel with the shape of the interface boundary. For an expected fringe-to-fringe separation of $\lambda/2n_f$, one expects a stacked-array of approximately $m \approx d/(\lambda/2n_f)$ individual laser-interaction disks to form on the same $\lambda/2n_f$ spacing inside the film thickness, $z$, with the absolute disk positions locked in place according to the electric field phase shifts that arise on reflection at the interface boundaries **(20, 22)** according to the refractive index and extinction coefficient values of air, film and substrate. For simplification, we assume the substrate is sufficiently thick such that the laser pulse transit time twice through the substrate will exceed the pulse duration and prevent a second set of interference fringes from forming inside the film **(14)**. For a thinner and transparent substrate and/or longer pulse duration, a modified interference pattern will be generated in the film that can readily be calculated by a practitioner in the field of optics based on reflections from three interfaces (i.e. air-film, film-substrate, substrate-air) to determine the new positions of interference maxima in the film as well as in the substrate, and favorably position high contrast fringes in either medium.

**Figure 1(b)** depicts, in the immediate aftermath of the laser pulse interaction, the localization of dissipated laser energy into a stacked array of thin disks **(24, 26, 28, 30)** aligned with the high intensity interference zones **(18)** as formed by the Fresnel reflections in **Figure 1(a).** In a preferred embodiment of the invention, the laser interaction zones have formed, and initiated modification of the material into isolated thin disk zones on a time period that is shorter than the time, $\tau_d = \lambda^2/64n_f^2 D$, for thermal diffusion between the fringes (one-half of the fringe-to-fringe spacing). In another preferred embodiment of the invention, the laser pulse duration, $\tau_p$, is shorter that this thermal diffusion time, $\tau_d = \lambda^2/64n_f^2 D$. In another preferred embodiment of the invention, the spectral bandwidth of the light source satisfies $\Delta\lambda_L < \lambda^2/2n_f z$, in order to generate interference fringes with sufficient contrast for localized laser interaction. This preferred embodiment can be restated to require the film thickness to satisfy $z < \lambda^2/2n_f\Delta\lambda_L$ in order to generate interference fringes with sufficient contrast. In another preferred embodiment of the invention, the laser interaction disks are isolated into zones thinner than one half of the fringe spacing $\lambda^2/4n_f$.

A skilled practitioner in the field of laser material processing will understand that a multitude of laser exposure conditions onto the film can be applied to control the laser interactions by varying, for example, the pulse energy, the wavelength, the focal spot size, the depth of focus, the axial beam waist position relative to the film surface, the repetition rate, the peak power, the pulse duration, the temporal profile of the pulse or burst train, the numerical aperture of the beam, the beam profile or shape of multiple or combined beams, the spatial or temporal coherence, the pulse front tilt, the spectral bandwidth or shape or spectral chirp, the time delay between two or multiple overlapping pulses, and the incident angle of the beam or multiple overlapping beams onto the film. In this way, energy dissipation in each disk zone in **Figure 1(b)** can be widely varied to drive a diverse range of material modification directions and outcomes, with examples of several embodiments depicted for the film on a substrate as shown in **Figures 1(c) to (k)**. This laser exposure control applies broadly to all other figures and embodiments herein.

**Figure 1(c)** depicts for laser exposure above a threshold for material modification, the opening of film (**14**) by a thin cavity (**32**) at the first interaction interference fringe position (top dark disk in **Figure 1(b)**) (**24**), and commensurate formation of a blister denoted *Segment 1* (**S1**). A practitioner in the field of laser material processing will understand that the first laser interaction zone (**24**) separating **S1** and **S2** will typically have preferential access to absorb a larger portion of the full incoming laser power, thereby reducing the laser intensity available at deeper interaction zones. Laser interactions in the first zone may generate defects, electron-hole pairs, plasma, or other material modifications that lead to increased absorption and reflection of the incident laser light with the consequence of less light reaching the deeper interaction zones. Hence, one may anticipate the first evidence of laser modification of the film to take place as depicted in **Figure 1(c)**, where the top-most laser interaction zone (**24**) undergoes a micro-explosion that cleaves the film to open a nanovoid (**32**) and form a thin closed blister denoted as **S1**. At this threshold for film modification, the deeper interaction zones (**26, 28, and 30**) have not absorbed sufficient laser energy to initiate cleaving or other form of modification, and thus the film remains undisturbed below the top-most laser-cleaving plane at the first fringe maximum (**24**).

In a further embodiment, the laser interference pattern in the film can be preferentially designed by a practitioner in optical physics to generate lower laser intensity at the top surface interface (**20**) than at the position of the first fringe maximum (**24**), such the laser ablation is first or only initiated internally, and not at the surface (**20**). Similarly, a low intensity can be optically engineered at the second interface position (film-substrate (**22**)) to preferentially initiate laser ablation or cleaving at the first internal interaction zone (**24**) without laser damage to the film-substrate interface.

**Figure 1(d)** depicts the perforation (**34**) of the blister defined as **S1** in **Figure 1(c)** at a slightly increased laser exposure. With increase laser exposure, the nanocavity (**32**) increases in size from the case in **Figure 1(c),** and the blister perforates (**34**), with increasing cavity size and increasing open diameter of the perforated blister for the case in **Figure 1(d).**

**Figure 1(e)** depicts for a slightly higher laser exposure the opening of film (**14**) by a thin cavity (**36**) at the second interaction interference fringe position (second dark disk from top in **Figure 1(b)** (**26**)), and commensurate formation of a blister denoted *Segment 2* (**S2**), together with the ejection of the first segment blister (**S1**). At this laser exposure, only the first (**24**) and second (**26**) laser interaction zones are depicted to have exceeded the threshold for material modification, with plasma shielding or other factors cited above serving to inhibit a material modification in the lower interaction zones (**28, 30**) or the film-substrate interface (**22**). A more energetic laser cleaving in the first interaction zone (**24**) has served to fully eject **S1** in a thickness defined by the first fringe maxima position relative to the top surface.

**Figure 1(f)** depicts the perforation (**34**) of the blister defined as **S2** in **Figure 1(e)** at a slightly increased laser exposure, following trends similar to those described above in the transition of **S1** from blistering in **Figure 1(c)** to blister perforation in **Figure 1(d).**

**Figure 1(g)** depicts for a higher laser exposure the opening of film (**14**) by a thin cavity (**38**) at the third interaction interference fringe position (third dark disk from top in **Figure 1(b)** (**28**)), and commensurate formation of a blister denoted *Segment 3* (**S3**), together with the ejection of the first (**S1**) and second (**S2**) segment blisters. One anticipates the mechanics of laser cleaving to first eject the first segment (**S1**) to be followed with a time delay by the ejection of **S2**. Plasma shielding and other factors attenuating and reflecting the incident light at the three topmost laser interaction zones are depicted to have inhibited a permanent modification at the fourth interaction zone (**30**).

**Figure 1(h)** depicts the perforation (**34**) of the blister defined as **S3** in **Figure 1(g)** at a slightly increased laser exposure, anticipating trends similar to that described previously in the transition between **Figure 1(c)** and **1(d).**

**Figure 1(i)** depicts for a significantly higher laser exposure the opening of a thin cavity (**40**) at the interface (**22**) of the film (**14**) and substrate (**16**), and commensurate formation of a blister denoted *Segment 5* (**S5**), together with the ejection of the first (**S1**), second (**S2**), third (**S3**) and fourth (**S4**) segment blisters driven from the respective first (**24**), second (**26**), third (**28**), and fourth (**30**) interaction interference fringe positions (first (**24**) to fourth (**30**) darks disks from top in **Figure 1(b)**). A temporal sequential ejection of the disks is anticipated in the order of the top-most disk (**S1**) first and segment **S4** last.

**Figure 1(j)** depicts the perforation (**34**) of the blister defined as **S5** in **Figure 1(i)** at a slightly increased laser exposure.

**Figure 1(k)** depicts the ejection of all segments (**S1 to S5**) at a slightly increased laser exposure, forming a 'blind via' (**42**) through the optical film (**14**) to the underlying substrate (**16**). A sequential ejection is anticipated beginning with **S1** and ending with **S5**. Over the course of increasing laser energy for the depictions in **Figures 1(c)** to **1(k)**, one anticipates the segments, **S1**, **S2**, **S3**, **S4** and **S5**, to be ejected from evenly spaced laser cleavage planes separated by the fringe spacing, $\lambda^2/2n_f$, thus offering a new means for quantum ejection of layers **S1** to **S5** that can be controlled by the laser exposure. Such novel internal laser interaction, particularly the internal laser cleaving, has not been previously demonstrated nor anticipated.

In another embodiment of the invention, a skilled practitioner in optical physics with an understanding of basic optical design will be able to favorably vary the spacing of the laser cleavage planes ($\lambda/2n_f$) through various obvious means, including changes to the angle of the incident laser (spacing of $\lambda/2n_f\cos\theta$, where $\theta$ is the angle of incidence as well as reflection internally in the material with refractive index, $n_f$), the laser wavelength, the film material to vary the refractive index, or the film properties by the laser generation of plasma, defects, or electron-hole pair generation, for example.

A demonstration of the present invention is made for the case of silicon nitride (SiN$_x$; $n_f$ = 1.98) film (**14**) of $z$= 500 nm thickness on a silicon substrate (**16**) ($n_{si}$ = 4.192 and $\kappa_{si}$ = 0.036) irradiated with a $\lambda$ = 522 nm wavelength laser beam (**12**) incident from the top as depicted in **Figure 2(a)**. Four fringe maxima are anticipated from $m \approx z/(\lambda/2n_f)$) on $\lambda/2n_f$ = 131.8 nm period to have a fringe visibility of 0.63 as calculated across the film and plotted (**44**) in **Figure 2(b)**. An intensity node is positioned near the SiN$_x$-silicon interface (**22**) due to the high index contrast, therefore locking the fringe pattern (**44**) with the last fringe maximum (**30**) positioned at approximately $\lambda/4n_f$= 65.9 nm from the bottom interface (**22**). As a consequence, the position of the first fringe (**24**) maximum from the top surface (**20**) will vary with the film thickness, shown at $z - m\lambda/2n_f \approx$ 38.7 nm ($m$ = 4) from the air-SiN$_x$ interface (**20**) for the case in **Figure 2(b)**.

At moderately low laser intensity, stronger linear optical interaction in the silicon substrate dominates over the nonlinear plasma excitation in the transparent film to drive laser heating only to a penetration depth of $1/\kappa_{si}$ = 28 nm in the silicon. The machining at the film-silicon interface due to this thin heating zone underpins the physics for blistering and ejection of whole films as reported in references [10, 21, 22, 24-26] over varying film thickness and without evidence of internal structuring of the transparent film. However, such interface machining was found together with the first evidence of internal interferometric laser structuring of the film as shown in **Figure 2(c)** by the scanning electron micrograph (SEM) images for the present 500 nm thick film (**14**) exposed at a threshold incident intensity of $I_{avg}$ = $9\times10^{12}$ W/cm$^2$. The morphology of such laser processed samples was inspected in both top and cross-sectional SEM views, with axially cutting made with a focused ion beam (FIB) for cross-sectional SEM imaging. Laser induced cleavage planes (**24, 26, 28, 30**) in **Figure 2(a)** defined by four Fabry-Perot maxima are seen to have ejected thin disk segments **S1** and **S2** as well as formed nano-voids at positions found to align with the calculated positions of the interference maxima as indicated by the connecting dashed lines to **Figure 2(b)**. These fringe maxima positions (connecting dashed lines) define the anticipated segment sizes (**S1, S2, S3, S4, S5**) in **Figure 2(b)** that match well with the morphology observed in **Figure 2(c)**, namely, a rim on the hole edge (**46**) marking the full ejection of **S1**, the partial ejection of **S2** in the oblique top view, the blistering of a fused layer (**48**) of **S3** and **S4** over a large nanovoid (**54**), and an internal blister of **S5** between two nanovoids (**40, 54**).

A radius of 0.53 $\mu$m is observed for the fully ejected second disk in **Figure 2(c)**, which is commensurate with the radius $\omega_o$ = 0.494 $\mu$m ($1/e^2$) calculated for the focused Gaussian beam. At this radial position ($\omega_o$), the internal laser intensity modulates axially from 0.84 to 3.74 TW/cm$^2$ as shown (**44**) in **Figure 2(b)**, suggesting a threshold intensity exposure of 3.74 TW/cm$^2$ for internal structuring of the film.

In one non-limiting embodiment of the invention, nonlinear laser absorption will ionize the transparent film material preferentially at the fringe intensity maxima and create plasma. Continuing with the SiN$_x$ film example, the interference-modulated intensity profile ((**44**) in **Figure 2(b)**) was applied to predict the electron density profile generated inside the SiN$_x$ film at the observed laser threshold for internal structuring. Because of the short duration laser pulse (200 fs), nonlinear light interactions inside the dielectric film will be dominated by multiphoton absorption and electron avalanche that ionize atoms to create an electron density $n_e$ according to equation (1)[27]:

$$\frac{dn_e(t)}{dt} = n_e(t)w_{imp} + N_a w_{imp} - \frac{n_e(t)}{\tau_r}. \qquad (1)$$

Here, the impact ionization rate ($W_{imp}$) and multiphoton ionization (MPI) rate ($W_{mpi}$) at the incident laser intensity ($I$), are given by equation (2) and (3), respectively[27],

$$w_{imp} \approx \frac{\varepsilon_{osc}}{J_i} \frac{2\,\omega^2 \nu_{eff}}{\left(\nu_{eff}^2 + \omega^2\right)}, \qquad (2)$$

$$w_{mpi} \approx \omega N_a^{3/2} \left(\frac{\varepsilon_{osc}}{J_i}\right)^N, \qquad (3)$$

and the effective electron collision time ($\tau_{eff}$) and the electron quiver energy ($\varepsilon_{osc}$) are calculated by equation (4)[28] and (5)[27]:

$$\tau_{eff}[sec] = \frac{1}{\nu_{eff}} = \frac{16\pi\varepsilon_o{}^2\sqrt{m_e{}^*(0.1E_g)^3}}{\sqrt{2}\ e^4 n_e(t)}, \qquad (4)$$

$$\varepsilon_{osc}[eV] = \frac{e^2\mathcal{E}^2}{4\ m_e\ \omega^2} = 9.34\frac{I}{10^{14}[W/cm^2]}\lambda^2[\mu m]. \qquad (5)$$

The electron relaxation ($\tau_r$ term in Eq. (1)) is insignificant for the short duration ($\tau_p$ = 200 fs) laser pulse considered here. For SiN$_X$, values of $N_a$ = $8\times10^{22}$ cm$^{-3}$ for the atomic density, $E_g$ = 5.3eV for the bandgap[29], $J_i = E_g$ for the ionization potential, and $m_e{}^*$ = $m_e$ for the effective mass of electron were used for computing the electron density. The laser frequency is given by $\omega$= $2\pi c/\lambda$ and the order of nonlinear MPI was rounded up to

$$N = \lceil J_i/\hbar\omega \rceil = 3.$$

The time dependent equations (1), (2) and (4) were simultaneously solved to follow the temporal rise of the electron density expected for the spatial intensity profile in **Figure 2(b).** At the end of the laser pulse, the electron density (**50**) is seen in **Figure 2(b)** to peak strongly at the fringe maxima to a value of 5.87 $\times$ 10$^{21}$ cm$^{-3}$. This value surpasses the critical plasma density (**52**) ($n_{cr}\sim$ 4.10 $\times$ 10$^{21}$ cm$^{-3}$) where the plasma becomes opaque to the laser and is typically expected to initiate material damage[13, 21, 22]. Hence, the radial extent of the ejected disks at the laser-defined cleavage planes (0.494 $\mu$m in **Figure 2(c)**) match closely with the typical laser-plasma conditions found to damage materials. Further, the simulations showed the impact ionization to advantageously thin the laser-plasma zone to 45 nm thick disks in **Figure 2(b)** that is significantly narrower than the Fabry-Perot fringe width of 91 nm. Further, a calculation of the thermal diffusion time to wash out the fringes in SiN$_X$, $\tau_d$ =$\lambda^2/64n_f^2D$ = 100 ps is 500x larger than the laser pulse duration. Hence, an array of thin heating disks (**24, 26, 28, 30**) are predicted to have formed (**Figure 2(a)**) on the $\lambda/2n_f$ fringe spacing on time scales shorter than thermal transport to serve as a new means for machining inside thin transparent films on size scales much smaller than the $\sim$ 2.3 $\mu$m depth of focus.

To test the principles of forming a periodic stacked array of laser interaction zones on Fabry Perot interference fringes (**24, 26, 28, 30**), an embodiment of the present invention consisting of SiN$_x$ film grown over a silicon wafer were prepared as follows. SiN$_x$ film of thicknesses ranging from 20 nm to 1545 nm were grown by Plasma Enhanced Chemical Vapor Deposition (PECVD) on single-side polished p-doped (001) crystalline silicon wafers of 400 $\mu$m thickness in a PlasmaLab 100 PECVD system (Oxford Instruments) at 300°C and 650 mT chamber pressure using a gas mixture of 5% silane in nitrogen (400 seem), ammonia (20 seem) and pure nitrogen (600 seem). The deposition was carried out at the rate of 14 nm/minute by using alternate combinations of high frequency (13.56 MHz) for 13 seconds and low frequency (100 kHz) for 7 seconds, successively. The radio frequency (RF) power was set to 50 W and 40 W for high and low frequencies, respectively.

To further test this non-limiting embodiment of the present invention, a fiber laser (IMRA, FCPA $\mu$Jewel D-400-VR) operating at 100-kHz repetition rate and with beam quality of M2 = 1.31 was frequency doubled to generate $\tau_\rho$ = 200 fs duration pulses at $\lambda$ = 522 nm wavelength. By monitoring the back reflection on a CCD camera, a plano-convex lens of 8 mm focal length (New Focus, 5724-H-A) was positioned to focus the Gaussian-shaped laser beam to a spot size of $\omega_o$ = 0.495 $\mu$m radius (1/e$^2$ irradiance) onto the sample surface. Alternatively, a uniform exposure profile was attempted by masking the $\sim$ 4.5 mm diameter laser beam with either a 0.6 mm $\times$ 0.6 mm square aperture or a circular aperture (1 mm diameter) positioned $\sim$115 cm before an aspheric lens of focal length $f$ = 2.8 mm to image to a comparatively uniform 1.5 $\mu$m $\times$ 1.5 $\mu$m square beam or 2 $\mu$m diameter top-hat beam profile, respectively. A computer controlled linear polarizer attenuator varied the laser pulse energy between 5 and 70 nJ and single pulses were applied to each site by scanning the sample with an XY motorized stage (Aerotech, ABL1000). Laser raster scanning was employed to separate (speed > 15 $\mu$m/s) or to stitch together laser modification structures while an acousto-optic modulator (AOM) (Neos, 23080-3-1.06-LTD) further offered flexibility in patterning the surface with computer control.

The definitive evidence of the confinement of the laser-generated plasma into thin disks to create sharp and periodic cleavage planes inside the film is the observed alignment of the annular structures (**46**), the ejected membranes (**S1, S2**) and the nano-voids in **Figure 2(c)** with the calculated fringe maxima positions in **Figure 2(b).** The ejection of the first membrane structure (**S1**) is evidenced by the annular ring (**46**) seen in the top view at $\sim$ 34 nm depth that matches closely with the expected 29 nm deep position of the first fringe or laser heating disk (**24**). The partially attached membrane

(S2) in the oblique top view image was formed by plasma-cleavage at the 1st (24) and 2nd (26) fringe maxima, defining a ~ 135 nm thick membrane that matches the expected $\lambda/2n_f$= 131.8 nm fringe spacing. The 3rd and 4th expected membrane structures (S3, S4) are seen to be fused into a double layer of ~ 267 nm thickness to form a non-punctured blister with thickness that matches the expected double-fringe spacing ($2\lambda/2n_f$= 263.8 nm). Underlying this blister, a microexplosion from a thin disk plasma zone (30) is inferred to have expanded into an ~ 800 nm diameter nano-void (54) of ~ 138 nm height. A deeper nano-void (40) is seen to have opened at the silicon-film interface (22) to ~ 45 nm height. These nano-voids (40, 54) define the fifth and final membrane (S5) whose observed ~ 64 nm thickness matches closely with the expected quarter-fringe thickness (65.7 nm). One may therefore understand the fusion of the third and fourth segments (S3, S4) not to be an anomaly omitting laser cleavage at the 3rd fringe position (28), but arising from competition associated with opposing forces of microexplosions in the top two cleavage planes (24, 26) against the powerful shock and pressure driven from laser microexplosions at the underlying fourth fringe position (30) and the film-silicon interface (22), and thereby containing the potential microexplosion from the third fringe position (28).

Once critical plasma density ((52) in **Figure 2(b)**) is reached at the first fringe position (24), strong light reflection and attenuation will reduce the forward propagating beam intensity of the incoming laser (12), diminishing the interaction strength at deeper fringe positions (26, 28, 30). This presents the opportunity for controlling the number of strong laser-heating zones to vary the number of ejected segments and nano-voids formed inside the film with varying laser exposure. These principles are demonstrated for a thicker 945 nm SiN$_x$ film (14) in **Figure 3** for the Gaussian-shaped beam to the maximum available fluence of 21.65 J/cm$^2$. The top and cross-sectional SEM images (F**igure 3(a) (i-viii)**) show an expected widening of the laser modification zone for such beam shape from 1.3 $\mu$m to 2 $\mu$m diameter with the increasing fluence. Above the modification threshold of ~3.50 J/cm$^2$, a first segment (S1) of ~ 64 nm thickness was completely ejected while *segment 2* (S2) formed into a punctured (34) blister with a ~ 135 nm diameter open hole, shown for 4.46 J/cm$^2$ exposure in **Figure 3(a) (i)**. At a higher fluence of 6.37 J/cm$^2$, **Figure 3(a) (ii)** shows the complete ejection of *segment 2* (S2). The *3rd and 4th segments* (S3, S4) are seen (side view in **Figure 3(a) (iii)**) here to be fused into a ~ 270 nm thick blister overlying a ~ 260 nm deep nano-void (54), as similarly observed in the previous case of the 500 nm film in **Figure 2(c)**. These fused segments (S3, S4) form into a punctured blister (34) at 10.2 J/cm$^2$ fluence (side view in **Figure 3(a) (iv)**) and are partially ejected at the higher laser exposure of 15.9 J/cm$^2$ (side view in **Figure 3(a) (vi)**), leaving an annular ledge clearly visible within the via. This sequence of blistering, puncturing (34) and ejection of segments to quantized depths advances to deeper inside the film with further increase in laser fluence (i.e. **Figure 3(a) (vii), (viii)**). In this way, the experimental observation verifies many of the anticipated trends discussed around **Figure 1.**

The developing film morphology with increasing laser fluence is summarized graphically in **Figure 3(b)** by the threshold fluences observed to form a solid blister (56), a punctured blister (58), and an ejected blister (60) at each anticipated segment, **S1** to **S8**. The morphology zones were thus separated vertically and reported for each segment position according to the observed cleavage plane (dashed line). The cleavage positions were again found to align closely ($\leq \pm$ 6 nm) with the calculated Fabry-Perot intensity (62) maxima as aligned graphically on the right. *Segment 1* (S1) was found to eject (60) at 4.46 J/cm$^2$ threshold fluence together with the perforated (34) blistering (58) of *segment 2* (S2) without revealing a blistering phase (56 or 58) for the first segment (S1). The laser-plasma generated at the first fringe position may have burnt through the thin (64 nm) first segment (S1) to prevent survival of a solid film phase and lead to such blistering. A nano-void was not observed to open between *segments 3 and 4* (S3, S4), resulting in blistering (56), perforation (58) and ejection (60) of the two segments together in the respective fluence ranges of 5.41 - 9.24 J/cm$^2$, 9.24 - 14.97 J/cm$^2$, and ≥14.97 J/cm$^2$, as shown in **Figure 3(a) ((ii)-(vii))** and **3(b)**. This anomalous two-layer fusion of **S3** and **S4** was also observed in SiN$_x$ films varying from 500 nm to 1545 nm thickness, and may arise from the timing of shock forces originating in the other interactions zones above and below the **S3**/**S4** interface disk, as well as shock forces reflecting from the film interfaces, to resist and contain the thin laser disk ablation force. **Figure 3(a) (i)** and **2(c)** also show the low threshold onset of void (40) formation at the SiN$_x$-Si interface (22), which morphology changes beginning at a low fluence threshold of ~3.50 J/cm$^2$.

The observed remains of the ejected SiN$_x$ segments (i.e. (S2) in **Figure 2(c)** inset and **3(a) (ii)** and fused segments (S3) and (S4) in **Figure 3(a) (vi)**) suggest the array of laser-induced plasma zones do not burn through and vaporize the forming membranes. Thus, one anticipates the quantized ejections of segments to follow in a temporal sequence as the plasma planes heat and microexplode, beginning from the near-surface (i.e. 24)) to the lower (i.e. (26, 28, 30)) cleavage positions as depicted in the image series of **Figures 1(a)** to **(k)**.

The interferometric internal structuring of a thin transparent film on a high index substrate with a laser as embodied in the example of a 500 nm thick SiN$_x$ film (14) on a high index silicon substrate (16) in **Figure 2** definitely verifies the quantized ejection of film segments (S1, S2) from thin laser cleavage planes (24, 26) in the film (14). According to the experimental arrangement, a long depth of focus ($d_f$ ~ 2.3 $\mu$m) greater than the film thickness facilitates multiple reflections of the beam from the air-SiN$_x$ (20) and SiN$_x$-silicon (22) interfaces to form into four evenly spaced Fabry-Perot fringes at $\lambda/2n_f$= 131.8 nm separation. The nonlinear laser-material interactions (Eq. 1 to 5) were further found to confine the laser dissipation into flat ~ 45 nm thick disks (24, 26, 28, 30) (**Figure 2(b)**) that align with Fabry-Perot maxima positions and define cleavage planes to internally structure (32, 36, 38, 54) the film (14). In **Figure 2**, a threshold intensity

of 9 x $10^{12}$ W/cm$^2$ was associated with the electron density (**50**) reaching critical plasma density (**52**) ($n_{cr}$ = 4.10 x $10^{21}$ cm$^{-3}$). In the case of the first fringe position (**24**), such dense plasma will attenuate and reflect the incoming laser light to therefore reduce the intensity to below threshold at deeper fringe positions. Hence, for this threshold exposure, one anticipates only the top-most fringe position to cleave open into a single nano-void (**32**) or to explosively eject only the top segment (**S1**).

Given the flow of laser energy from above the film, an increase in laser exposure in the present example to compensate for such plasma shielding will drive the electron density to critical density at deeper fringe positions. In this way, several segments were seen to be ejected (i.e. **Figure 3**), but are anticipated to be delayed in time as each deeper plasma disk explodes against the shock pressure of the disks explosions above. For each segment, one first anticipates, as seen in **Figure 2**, a nanovoid to open inside the film at the cleavage plane, and form a thin blister, followed by perforation of the blister, and finally the ejection of a $\lambda/2n_f$ thick segment from the film. The sequential blistering and ejection from fringe positions deeper in the film, hence presents a novel opportunity to tailor the laser exposure to excite a controllable number of laser-heating zones and thereby control the film morphology and processing depth in discrete quantum steps, not previously anticipated.

In a further embodiment of the invention, the sequential ejection of film segments was monitored with time-resolved 2-dimensional side-view imaging of the laser ablation plume, captured through a microscope objective (50x) onto an intensified CCD camera (ICCD) (Andor, iStar DH734-18U-03). The ICCD trigger gating was synchronized to the laser pulse with a digital delay generator (DDG) (Stanford Research Systems, DG535) while the laser repetition rate was down counted to 1 Hz with an AOM. Plume emissions were recorded with gate width varied from 3 to 50 ns and time delays from 0 to 2 $\mu$s, and were examined for a wide range of laser exposure conditions (50 to 380 nJ) in a 500 nm thick SiN$_x$ film on a silicon substrate (similar to the example in **Figure 2**).

The evidence for this sequential ejection is seen in time-gated ICCD images recorded from a 500 nm thick SiN$_x$ film shown in **Figure 4(a)**, revealing various slow and fast ejection components of ablation plume in isolated clusters whose number matched well with the number of segments found by SEM to be ejected for a given laser fluence. For example, the SEM image of the film (**Figure 4(b)**) reveals the ejection or partial ejection of 5 segments (**S1 to S5**) when irradiated with 13.67 J/cm$^2$ fluence. Segments **S1** and **S2** are clearly seen to be fully ejected. Segments **S3** and **S4** are fused into a single blister and perforated (**34**), confirming the partial ejection of these two segments. A large nanocavity (**54**) at the fourth anticipated fringe position (**30**) and evidence of a collapsed nanocavity (**40**) at the SiN$_x$-Si interface (**22**) delineate the collapse of this segment **S5** segment against the silicon substrate (**16**) together with evidence of perforation (**34**) to confirm partial ejection of segment **S5**.

The segments were ejected in isolated clusters of plume, as observed by the ICCD image frames in **Figure 4(a)**, appearing in time zones of 3 - 9 ns (**S1+S2**), 173 - 193 ns (**S3**), 233 - 393 ns (**S4**) and 393 - 1493 ns (**S5**) as marked therein. The plume positions were followed up to 180 $\mu$m distance from the film surface (**20**), with their observed positions recorded as a function of time in **Figure 4(c)**. We infer the $5^{th}$ *segment* to be the last ejected plume (**S5**). The partial ejections of the fused $3^{rd}$ (**S3**) and $4^{th}$ (**S4**) *segments* are nearly indistinguishable, appearing together with less than 200 ns delay time in **Figure 4(a),** while the first appearance of the $5^{th}$ *segment* (**S5**) is found at hundreds of nanoseconds after the laser irradiation time. Therefore the bright emissions observed (**Figure 4(a)**) in the 3 - 10 ns zone are ascribed to plume expansion and membrane ejection of the $1^{st}$ (**S1**) *and* $2^{nd}$ (**S2**) *segments* promptly after the laser exposure. At this fluence, the first two segments appeared bright and promptly, moving at ~2.8 km/s speed, while the ejection of deeper layers were seen much later (173 - 1500 ns) owing to much lower speeds of 0.1 km/s for the $5^{th}$ *segment* (**S5**) as inferred from **Figure 4(c)**. Hence, the directly ablated surface material and first ejected segments (**S1**) and (**S2**) appear promptly with the highest speeds, while the inertia of pushing against the upper layers leads to a delayed ejection and $\sim$ 30-fold lower ejection speeds for the deeper segments (**S3, S4, S5**) formed within the film. At lower laser exposure, fewer numbers of segments were observed to be ejected, commensurate with the reduced number of observed ejection segments expected as described in **Figure 3**. Further, the speed of ejected segments was reduced (increased) with decreasing (increasing) laser exposure, as expected when less (more) laser energy is absorbed into the thin interaction disk and thereby driving weaker (stronger) ablative forces.

In an embodiment of the present invention, the film (**14**), as depicted over a substrate in **Figure 1(a)**, may instead be free standing (**14**) as depicted in **Figure 5(a)**. One would understand the film to be transparent, and surrounded by air, or gases, or vacuum, or liquid, or plasma, and combinations thereof, with different media also anticipated on the opposite surfaces. Various embodiments are envisioned where the film could be rigid or flexible, could be thick or thin, could be non-uniform or irregular in thickness, could also be an etalon, a window, a wafer, a circuit board, a CCD sensor, a LED wafer, an optical display, a biological film, or a tissue, and could consist of various pure or mixtures of materials, for example, including a polymer, a gel, a liquid layer or sheet, a liquid carrying small or large particles or nanomaterials, an ionic fluid, a flowing jet of liquid, or a flowing sheet of glass or ceramic or polymer or any transparent material.

The laser interaction that underlies the present invention, taking place in these various embodiments of a film, is described in **Figure 5**. Here, the laser modification is anticipated at one of or at both of the first interface (**20**) and second interface (**64**) of the film that opens the novel aspects of nanovoid or cavity formation, blistering, and quantum ejection of segments to take place either symmetrically or asymmetrically on the two surfaces. The process begins with **Figure 5(a),** depicting the division of the focal interaction volume of incident laser light (**12**) into interference fringes (**18**) inside the free standing transparent film (**14**) as a result of the interference of Fresnel reflections of the incident light from the boundary interfaces (**20, 64**). In the present example, **Figure 5(b)** shows, in the immediate aftermath of the laser pulse interaction, the localization of dissipated laser energy into a stacked array of thin disks (**24, 26, 28, 30**) aligned with the four high intensity interference zones (**18**) as formed by the Fresnel reflections in **Figure 5(a).**

In the following examples of embodiments of the invention, the laser interaction leads to a symmetric processing of the top (**20**) and bottom (**64**) surfaces of the film. **Figure 5(c)** depicts for laser exposure above a threshold for material modification, the opening of film (**14**) by two thin cavities (**32, 54**) at the first (**24**) and last (**30**) interaction interference fringe positions shown in **Figure 5(b),** and commensurate formation of two blisters on the opposite surfaces denoted as *segments 1* (**S1**) and *5* (**S5**). **Figure 5(d)** depicts the perforation (**34**) of the blisters defined as **S1** and **S5** in **Figure 5(c)** at a slightly increased laser exposure. **Figure 5(e)** depicts for a slightly higher laser exposure the opening of film (**14**) by two thin cavities (**36, 38**) at the second (**26**) and third (**28**) interaction interference fringe positions of **Figure 5(b),** and commensurate formation of two blisters denoted *segments 2* (**S2**) and *4* (**S4**), respectively, together with the ejection of the first segment blister (**S1**) and fifth segment blister (**S5**). A thin membrane (**S3**) is anticipated here to isolate the two nanovoids (**36, 38**). **Figure 5(f)** depicts the perforation (**34**) of the blisters defined as **S2** and **S4** in **Figure 5(e)** at a slightly increased laser exposure.

In the following embodiments of the invention, the laser interaction leads to an asymmetric processing of the top (**20**) and bottom (**64**) surfaces of the free standing film. **Figure 5(g)** depicts an asymmetric processing on the two surfaces (**20, 64**) at a laser exposure similar to the condition in **Figure 5(c)** or **5(d)**, where the opening of film (**14**) by two thin cavities (**32, 54**) at the first (**24**) and fourth (**30**) interaction interference fringe positions in **Figure 5(b)** is followed by formation of a perforated (**34**) blister denoted *Segment 1* (**S1**) at the first surface (**20**) and formation of a closed blister denoted *Segment 5* (**S5**) at the second surface (**64**). **Figure 5(h)** depicts an asymmetric processing for higher laser exposure, where the opening of film (**14**) by a single thin cavity (**54**) at the fourth (**30**) interaction interference fringe position of **Figure 5(b)** is followed by formation of a closed blister denoted *Segment 4* (**S4**) at the first surface (**20**) and formation of a closed blister denoted *Segment 5* (**S5**) at the second surface (**64**), together with the ejection of the first (**S1**), second (**S2**), and third (**S3**) segments.

**Figure 5(i)** depicts the ejection of all segments (**S1, S2, S3, S4, S5**) into opposite directions from the free standing transparent film (**14**) at a high laser exposure, driven from the first (**24**), second (**26**), third (**28**), and fourth (**30**) interaction interference fringe positions of **Figure 5(b)** and leading to opening of a through via (**66**) in the transparent film (**14**).

It should be understood that the embodiments in **Figure 5** are not limiting, and many other combination of structures are anticipated, with more or fewer cavities, perforated blisters, and ejection layers, extending to their formation in thinner or thicker film with more or less number of interaction zones, and driven by larger or smaller beam sizes or with different beam directions onto to the film.

In the present invention, it is understood that the embodiments described in **Figure 1 or 5** extend fully to consideration of many-layer structures, having various combinations of types and phases of materials. Two non-limiting examples of representations are given in **Figure 6,** which depicts a two layer (top) and a multi-layer (bottom) material structure of transparent films of refractive index value, $n_j$, and thicknesses, $z_j$, defined for a layer numbered, $j$, over a substrate (**16**). One further anticipates the layers also to be free standing without the substrate. One would understand the layers to be transparent, or combinations of transparent, partially transparent, scattering, and non-transparent layers. In these examples, the structures may be in air, or gases, or vacuum, or liquid, or plasma, or combinations thereof, with different media also anticipated on the opposite surfaces. Various embodiments are envisioned where the layered structure could be rigid or flexible, could be thick or thin, could be non-uniform or irregular in thickness, could also be an etalon, a window, a wafer, a circuit board, a CCD sensor, a LED wafer, an optical display, a biological film, or a tissue, and could consist of various pure or mixtures of materials, for example, including a polymer, a gel, a liquid layer or sheet, a liquid carrying small or large particles or nanomaterials, an ionic fluid, a flowing jet of liquid, or a flow of glass or ceramic.

In such multilayer structures (**Figure 6**), the optical design of the layers (values of $j$, $z_j$ and $n_j$) can be favorably designed by a practitioner knowledgeable in the field of optical interference physics to tailor the optical interference profile (**68**) and position fringe maxima at specific or a multitude of favorable locations in the layered structures. Laser processing is anticipated to be controllable, arising at one or at both of the first interface (**70**) and last interface (**72**) of the structures such as shown in **Figure 6**, or at any one or at select or at many or at all of the intermediate interfaces. This laser processing includes the novel aspects of nanovoid or cavity formation, blistering, and quantum ejection of segments to take place either symmetrically or asymmetrically on the designated interfaces or surfaces, driven from the laser interactions confined internally at the positions of Fabry-Perot interference (**68**) maxima present in several or all of the individual film layers.

As a non-limiting example, **Figure 6** depicts for a two layer (top) and multi-layer (bottom) film structure over a substrate (**16**), the division of the focal interaction volume of incident laser light (**12**) into thin interaction zones positioned at the fringe interference **(68)** maxima that follows as a result of the interference of Fresnel reflections of the incident light from the many boundary interfaces with fringe-to-fringe spacing varying in each layer according to $\lambda/2n_j$. With appropriate laser exposure, one anticipates in the present invention, the formation of nano-voids, blisters, and quantum ejected disks to be driven from any one or a combination of such thin interaction zones to lead to various combinations of internal and surface structures as were depicted in the more simple examples of **Figures 1** to **5**. It is further understood that when more than one layer of film is present in the laser processing structure, that any one or several or all of the layers may be thinner than a quarter wave thickness, $z_j < \lambda/4n_j$ for a layer number $j$, such that a interference fringe maxima extends over a large fraction of the layer or fully through one layer or over several thin layers or otherwise may avoid alignment within any one or several of the layers. The present invention therefore anticipates the formation of nano-voids, blisters, and quantum ejected disks to be driven from a single thin laser interaction zone that may extend over one or several of such thin film layers.

In the present invention, the various combinations of quantized surface ejection and nano-void formation directly inside a transparent film are promising to open a new means for fabricating novel combinations of optical, nanofluidic, and MEMs components with facile delivery of varying laser exposure. **Figure 7** presents this concept for fabricating micro- and nano-fluidic devices that encompass various reservoir designs **(74)** connected with different types of open **(76)** and buried **(78)** channels, including a mixing channel **(80)** with embedded barriers **(82)** and serpentine channels **(84)**. Fresnel lenses **(86)** and blazed gratings **(88)** are further depicted together with a large area membrane sensor **(90)**. This schematic of a multifunctional device design therefore combines optical, nanofluidic, and MEMs components over a large area and further demonstrates changes to film-colour when the film is modified by the present invention of interferometric laser processing. This non-limiting example depicts a 500 nm thick SiNx film **(14)** on a silicon substrate **(16)** with features produced according to the several of the anticipated processes from **Figure 1**. Both **Figure 1** and **7** anticipate four thin-disk zones of laser interaction **(24, 26, 28, 30)**, shown in **Figure 1(b)**. The laser-structured devices depicted in **Figure 7** may potentially be fabricated in films coated over microelectronic and CCD devices on silicon wafers that collectively offer a flexible and attractive integration platform, or in the various embodiments of free-standing films **(Figure 5)** or multilayered structures **(Figure 6)**, and the other embodiments described in the remainder of this patent.

The present invention anticipates an expansion of the interferometric laser fabrication to larger processing area. In an embodiment of the present invention, large area processing is anticipated by scaling up the pulse energy and beam size and, for example, blistering the film into a large-diameter MEMS device **(90)** as identified in **Figure 7.** However, such uniform processing requires focusing to a flat-top or uniform beam profile. With the present laser system, an approximately uniform beam was only available up to a maximum radius of $\sim 0.75\ \mu m$ due to diffraction limits of the lens. With this beam profile, more uniform morphology of nanovoids and blisters were generated at the ejected surface as presented in **Figure 9** and discussed further below.

In an embodiment of the present invention, larger area structuring beyond this 1.5 $\mu m$ spot size of the focused laser beam is also approached by stitching together arrays of individual exposure laser spots. For the case of a near-uniform square-shaped beam of 0.75 $\mu m$ spot size, various grid patterns of laser spots were examined at variable laser exposures to optimize this stitching and generate a uniform morphology over a larger area as shown in **Figure 10.** In this way, individual laser ejection zones to the first **(S1)**, second **(S2)**, or third **(S3)** segments could be stitched with high reproducibility over large scanned areas to depths aligned closely with the expected fringe positions at the 29 nm, 161 nm, and 293 nm depths, respectively, as shown in **Figure 7(i)**, **(ii)**, and **(iii)**, respectively, for the case of 500 nm thick SiN$_x$ film. Interestingly, the first segment **(S1)** was readily removed only when patterned in closely packed arrays **(92)** and exposed below the ejection threshold for an isolated laser spot. Laser shock is anticipated to assist with dislodging weakly bonded first segments **(S1)** in the neighboring exposure sites. Removal of this first segment layer offered a relatively smooth morphology **(92)**, manifesting in an expected color shift by thin-film interference from green **(94)** of the original as-deposited 500 nm film to red **(96)** for the remaining 471 nm film as seen by the inset image of **Figure 7(i)** and characterized further in **Figure 11**. With higher fluence exposure, reproducible ejection of more segments such as **S1** and **S2 (98)** in **Figure 7(ii)** and **S1, S2, and S3 (100)** in **Figure 7(iii)** could be stitched into larger arrays with deeper excisions of 161 nm and 293 nm, respectively, but with increasing ablation debris appearing on the sub-wavelength optical scale that is most prominent in **Figure 7(iii)** for the third segment ejection. This debris leads to strong optical scattering, overshadowing the thin-film interference effect to give the gray coloring **(102)** seen in the case of the second and third segment ejections **(Figure 7(ii)** and **(iii)** inset, respectively).

In a further embodiment of the present invention, different fringe-level ejections are combined to flexibly pattern combinations of nanovoids, blisters and quantum ejection sites in one- or two-dimensions over the surface of a film or multi-level films and create, for example, the multi-level reservoirs **(104))** and other integrated multi-level surface **(76, 80, 84, 86, 88)** and buried **(78, 90)** devices depicted in **Figure 7**. Regardless of this surface roughness and ablation debris in the present example, different ejection levels **(92, 98, 100)** could be interfaced to form pillars **(106)** around flat-bottom structures formed by ejecting segments **S1** and **S2 (98)** or **S1, S2** and **S3 (100)** as shown in the SEM image of **Figure 7(iv)**. This multi-level structuring was also applied to demonstrate the concept of a microfluidic mixer channel **(80)** with embedded barriers **(82)**, a Fresnel optical lens **(86)** and a blazed optical grating **(88)** with the characteristic green (**94**), red (**96**) and dull grey (**102**) colors patterned as shown in the optical images of **Figure 7(v)**, **(vi)**, and **(vii)**, respectively.

As previously seen (**Figures 2 and 3**), nanovoids (**36, 38, 54**) are expected to have opened inside the film (**14**) below the ejected segment layers (**Figure 7(i-iii)**). The potential for linking the buried nanovoids (**38**) below a closed-packed array of laser exposure spots is clearly demonstrated at the third fringe position (**28**) as shown in the SEM image of **Figure 7(viii)**, thus opening the means for writing buried nano-fluidic channels (**78**) that may link the various reservoirs as proposed in **Figure 7**. Such connected voids may further define an optical defect with advantageous optical properties for sensing or memory storage. With appropriate optical design of multi-layered structures, a properly positioned array of such connected voids may serve as a hollow light guide or optical grating coupler.

The integration of several embodiments of the present invention is demonstrated in **Figure 8**, showing an optical image of a multi-component device in a 500 nm thick $SiN_x$ film over a silicon substrate. The interferometric laser processing was applied to pattern three different ejection levels of **S1** (**92**), **S1** and **S2** (**98**) and **S1, S2** and **S3** (**100**) in combinations demonstrating examples of fabricating a Fresnel lens (**86**), blazed grating (**88**), and single deep (**74**) and multilevel (**108**) reservoirs connected with straight (**76**), serpentine (**84**), crossed (**110**) and mixing (**80**) open channels. As seen in **Figure 7**, the green film color (**94**) was shifted to red (**96**) in the channels where only one segment layer (**S1**) was ejected, while the other devices appear grey (**102**) due to the coarser structure found on ejection of deeper segments.

In one particular embodiment of the present disclosure, the digital laser processing of thin films for nanovoid formation, blistering and *segment* ejection is extended to larger and more uniform processing area. In one approach, the laser beam was masked with an aperture to form a top-hat beam profile, which in turn was demagnified to ~1.5 $\mu$m diameter by an imaging lens. Although diffraction-limited by the ~0.5 $\mu$m resolution of the lens, the observed film blistering and ejection led to the improved uniformity of the morphology as shown in the cross-sectional SEM views of a 500 nm thick $SiN_x$ film (**14**) over a c-silicon substrate (**16**) in **Figure 9** in contrast with the Gaussian-shaped laser profile (**Figures 2-4**). The blistering onset for *segment 1* (**S1**) at 93.5 mJ/cm$^2$ (**Figure 9(i)**) is seen to give way to the partial ejection of **S1** seen at 140.2 mJ/cm$^2$ in **Figure 9(ii)** together with the underlying nanovoids (**36** and **54**) at the second (**26**) and fourth (**30**) Fabry Perot fringe maxima positions. Hence, four segments (**S1, S2**, fusion of **S*3* and *S4*, S5**) have been delineated in the film by the interferometric scribing at this laser fluence. Laser induced damage (**40**) manifesting as a nanovoid is also evident at the $SiN_x$-silicon interface (**22**) at the threshold fluence found for blistering of the first segment (**S1**) **(Figure 9 (i))**, due to the lower damage threshold of silicon. At higher fluence of 303.8 mJ/cm$^2$, a uniform ejection of *segment 1* (**S1**) *and 2* (**S2**) is noted in **Figure 9 (iii)** together with formation of two blisters, one that is closed (fused segments **S3** and **S4**) and one that is broken (**S5**), and evidence of the respective underlying nanovoids (**54** and **40**, respectively) at the fourth fringe position (**30**) and the $SiN_x$-Si interface (**22**). At the maximum available exposure (436.2 mJ/cm$^2$) for this near uniform beam profile, one sees no further layer ejection in **Figure 9 (iv)**; however, *segment 5* (**S5**) has become more fully separated while *segments 3 and 4* remain fused as previously noted for the Gaussian-beam exposures in **Figures 2** - **4**. One notes an improvement in this top-hat beam shape to towards complete and uniform ejection of the segments with the increase in fluence exposure.

Various embodiments of the present invention are anticipated in the delivery of the laser beam to the surface. The focal beam waist may be positioned above or below the structure being processed to vary the spot size and beam divergence. Such divergence may be favorably applied to vary the fringe positions laterally through the film, or create curved fringe patterns, and thereby form non-planar shapes of voids and blisters (*segments*). The laser beam profile may be any shape conceivable, for example, Gaussian, Sinc, Bessel, top-hat, square, rectangular, a line, or a grid. Various beam shaping masks or devices well known to a practitioner in the field optics are anticipated that may be applied to flexibly create any beam pattern or profile available within optical limits, and thus vary the process and processing depth and generate flexible patterns of nano-voids, blisters, perforated blisters and quantum-ejected sites for a sign laser beam. The laser beam may be made to interfere with itself, for example, through holographic means or by using a phase mask, to form into lateral fringe patterns on the surface and thus vary the pattern of voids, blisters and quantum ejection levels induced locally according to the locally delivery laser energy that controls the interferometric laser process in the present invention.

In another embodiment of the present disclosure, larger and more uniform ejection zones were demonstrated with laser exposure by a near-uniform square beam profile (1.5 $\mu$m × 1.5 $\mu$m) that was raster scanned in square-grid and hexagonal patterns over 500 nm thick $SiN_x$ film (**14**) on a c-silicon substrate (**16**) with varying spot-to-spot offsets and laser fluences. The exposure and spacing combination was optimized to ideally bring together uniform ejection layers with minimal collateral damage and ablation debris. **Figure 10(a) (i) - (v)** shows SEM images comparing 396 mJ/cm$^2$ and 339 mJ/cm$^2$ fluence exposures on hexagonal patterns with varying 0.64 - 0.8 $\mu$m offsets. With 0.8 $\mu$m offset **(i)**, an exposure of 396 mJ/cm$^2$ resulted in closely packed but isolated ejections of *segment 1* (**S1**), while larger offsets would not eject this first segment. Reducing the offset from 0.8 $\mu$m **(i)** to 0.72 $\mu$m (**Figure 10(a) (iii)**) triggered the onset for ejecting *segment 2* (**S2**) while the most uniform morphology (**98**) with connected ejection zones of *segment 2* was found at 0.68 $\mu$m offset (**Figure 10(a) (iv)**). At the lower exposure fluence of 339 mJ/cm$^2$, a similar sequence of SEM images in **Figure 10(b) (i)-(v)** reveal the threshold offset for initiating second layer ejection to be shifted from 0.72 $\mu$m

(**Figure 10(a) (iii)**) to 0.68 μm (**Figure 10(b) (iv**) and the optimal offset for uniform ejection of **S2** (**98**) shifted from 0.68 μm (**Figure 10(a) (iv)**) to 0.64 μm (**Figure 10(b) (v)**). Hence, one can tune the spot-to-spot offset together with the laser fluence for high process flexibility in controlling the ejection zone morphology and extending the quantum ejection and blistering to large area.

In another approach for creating larger area patterns in a single pulse exposure, the application of an 800 nm wavelength ultrafast laser of 100 fs duration and more than 1 mJ pulse energy facilitated the formation of large area nanovoids and/or blisters by the present method of interferometric processing. By shifting the focal position away from the surface, large area modification of blisters and nanovoids exceeding 20 μm in diameter for circular beams or longer than 100 μm lines with cylindrical focusing were formed into similar SiN$_x$ coated silicon substrates.

In an embodiment of the invention, the spectral coherence or optical bandwidth of the laser may be tuned and varied in ways well know to a laser practitioner and advantageously control the interference fringe visibility such that high contrasting fringes and low contrasting fringes can be varied across the film or multi-leveled film structure. In this way, the formation threshold of voids, blisters and quantum-ejected zones can be varied to be excited at different positions within the film, such as from near the bottom surface (first fringe position (**24**)) with low spectral coherence, to the top surface (last or bottom most fringe position) with high coherence, such as expected in the case where the bottom surface interface has a much higher reflectance than the top surface interface and thus locks all the wavelengths to form into a common overlapping fringe nearest to the highest reflecting interface. This approach will be more effective as the film thickness grows, and in thick substrates, the fringe patterns may only be present near the high reflection boundaries or tuned favorably to select positions in certain film layers. The approach of controlling the fringe visibility can be further extended by combining two or more lasers such that the different independent interference patterns, so combined, will enhance and diminish the contrast of specific fringes and thereby vary the order in which the interactions zones at first fringe (**24**), second fringe (**26**), third fringe (**28**), and remaining fringes, are excited with increasing laser exposure. Hence, a practitioner in the field of optics will have various means of beam delivery control to break from the ordered sequence of blistering and ejection as anticipated in **Figure 2** beginning with first fringe position (**24**) at low fluence in **Figure 1(b)** and (**e**) to ejection of last segment S5 in **Figure 1(k).** The present invention anticipates various embodiments based on delivery of a single laser pulse or a number of pules, including a burst train of pulses with the same, similar or different pules energies that, in combination, will form nanovoids, blisters, and quantum ejection zones by the said method of laser interferometric processing.

The present invention anticipates tuning or varying of the laser pulse duration to advantageously create the interference pattern on time scales shorter than the time for thermal diffusion between the fringes, namely, in a time shorter than $\tau_d = \lambda^2/64 n_f^2 D$. The degree of thermal diffusion taking place during the laser interaction can be used to control the thickness and peak temperature induced in the laser interaction zone developing at the fringe maxima positions, and thus varies the shape of nanovoids and blisters as well as the processing depth in quantum ejection. For example, this thermal diffusion time, $\tau_d$, can vary from 4 ps in a good thermal conductor like silicon film to 17 ns in a thermal insulator like PMMA polymer, presenting large latitude for using lasers in the femtosecond, picosecond, and nanosecond time domains. Hence, pulsed lasers with pulse durations in the range of 0.1 fs to 100 ns are anticipated as a preferable range for practicing the present invention.

**Figure 11** shows spectral reflectance at normal incidence calculated as a function of SiN$_x$ film thickness on a c-silicon substrate. Vertical dashed lines highlight the reflectance spectrum expected at 500 nm (full film thickness) and 471 nm (film thickness after ejection of the first segment (**S1**)) film thickness, predicting the **green** (508 nm wavelength) to **red** (632 nm wavelength) shift on the brightest fringe observed by eye with visible light illumination as observed under an optical microscope (inset).

In another embodiment of the invention, the quantum ejection of the SiN$_x$ film segments lead to distinct color changes observed in the 500 nm thick film (**Figure 7(i) - (iii)** inset) that arise from thin-film optical interference effects. Following the Fresnel reflection and transmission coefficients, $r_1$, $r_1'$, $r_2$ and $t_1$, and $t_1'$, respectively, for internal and external reflections at the air-SiN$_x$ ($_1$) and SiN$_x$-silicon ($_2$) interfaces, the reflection spectrum ($r$) and spectral reflectance ($R$) for the thin film interference were calculated as a function of film thickness ($z$) of refractive index $n_f$ with equations 6 and 7, respectively, for normal incidence ($\theta = 0°$).

$$r = \frac{r_1 + \left(t_1 t_1' - r_1 r_1'\right) r_2' e^{-i\delta}}{1 - r_1' r_2' e^{-i\delta}}, \qquad (6)$$

$$R = rr^*, \qquad (7)$$

The wavelength dependence in the reflectance is found in the phase difference, $\delta = 4\pi n_f z cos(0)/\lambda$, which was

calculated over the visible spectrum ($\lambda$ = 400-750 nm) and plotted as a function of film thickness in **Figure 11**. For a 500 nm thick SiN$_x$ film, the calculated reflectance at normal incident are seen to offer two strong reflectance peaks centered at 508 nm (green) and 412 nm (violet) wavelengths. The relative 1000 times stronger human eye response at 500 - 520 nm will favor the green (**94**) wavelength dominating for this thickness, as seen in non-processed surface of the microscope image inset in **Figure 11.** When a first segment (**S1**) is ejected in a uniform array pattern (**92**), the remaining 471 nm thick film will shift intensity peaks to 632 nm (brilliant red), 481 nm (blue) and 391 nm (violet) wavelengths. The human eye is equally responsive to 632 nm and 481 nm wavelengths and shows very low response to 391 nm wavelength light. The brilliant red color (**96**) is anticipated to be dominant here given the higher spectral intensity of the 632 nm light emitted by the tungsten lamp, attesting to the brilliant red color observed from the film ejected to the first segment depth (inset in **Figure 11**). The modeling in **Figure 11** anticipates further color changes of film under thinning with ejection of deeper segments, as identified by the vertical dashed lines for ejection of **S1+S2**, **S1+S2+S3**, and **S1+S2+S3+S4** segments. This thinning in quantum steps offers a commensurate reduction of the number of observable wavelength fringes and short-wavelength shifts to discretely controllable wavelengths of 678 and 462 nm at 339 nm thickness, 425 nm at 207 nm thickness and 390 nm at the minimum 76 nm thickness corresponding with segment S5 remaining on the silicon. One anticipates the coloring to vary with the viewing angle ($\theta$ = 0° presented in **Figure 11**).

The invention further anticipates a $\pi$ phase shift in the interference condition (i.e. $\delta = \pi + 4\pi n_j z \cos(0)/\lambda$) when a nanovoid (**40**) has been formed at the present SiN$_x$-Si interface (**22**) to create a SiN$_x$-air interface, for example. The practical observation of color changes from deeper segments were overshadowed by optical scattering from the surface roughness and ablation debris which is anticipated to improve with further tuning of the laser exposure and/or chemical cleaning of the processed surface. Alternatively, the formation of larger area ejection zones (i.e. 10 $\mu$m in diameter with a 100 fs and 800 nm laser of > 1 mJ pulse energy) has provided uniform colour changes to deeper segment layers.

The formation of closed blisters, for example, in **Figures 1(c)**, **1(e)**, **1(g)**, and similar manifestations, also produce colour changes due to the presence of an additional thin air layer that modifies the optical interference in ways readily calculated by a practitioner of optics. Hence, a broader range of film colours is available by the present invention through ejection of a prescribed number of segment layers as well as by formation of nanovoids. The manifestation of forming a first layer (**S1**) blister as shown in **Figure 1(a)** is particularly advantageous in presenting a pristine continuous surface with colour controllable by the formation of the nanovoid internally below the surface. Such means may be attractive also for creating an anti-reflection surface to enhance absorption in photovoltaics or optical components.

The embodiments presented thus far as a thin film coated over a substrate (**Figure 1**), a free standing film (**Figure 5**), and multi-layered films (**Figure 6**) are further understood to support the invention of interferometric laser processing when such structures are bent, curved, and twisted into flexible shapes. The small spacing of the optical interference patterns generated by such twisted and curved structures will simply conform and follow the twisting shapes to sizes approaching the optical wavelength, thus enabling thin laser interaction zones to form on these curved shapes. As a non-limiting example, **Figure 12(a)** depicts the division of the focal interaction volume of incident laser light (**12**) into thin interaction zones (fringe pattern) (**18**) inside a flexible or curved free standing transparent film as a result of the interference of Fresnel reflections of the incident light from the boundary interfaces (**20** and **64**), for cases of a small diameter laser beam irradiating the top surface (**112**) or the bottom surface (**114**), multiple laser pulses irradiating adjacent positions in time sequence or simultaneously at a bottom surface (**116**), or a large area laser beam irradiating a top surface (**118**). The high intensity interference zones lead to localization of dissipated laser energy into a stacked array of thin disks at the fringe positions (**24, 26, 28, 30**).

In the aftermath of such pulsed laser interaction, **Figure 12(b)** depicts the localization of dissipated laser energy aligned with the high intensity interference zones as formed by the Fresnel reflections in **Figure 12(a)**, that lead to formation of various symmetric or asymmetric structures on the top and bottom surfaces: (1) asymmetric opening of film (**120**) by a thin cavity (**54**) at the last interaction interference fringe position ((**30**) in **Figure 12(a)**), ejection of the first three segments (**S1, S2, S3**) and commensurate formation of two blisters on the opposite surfaces denoted as *segments 4* (**S4**) and *5* (**S5**); (2) symmetric opening of film (**122**) by two thin cavities (**36, 38**) at the second and third interference fringe position ((**26, 28**) in **Figure 12(a)** for (**114**)), ejection of the first (**S1**) and last (**S5**) segments, and commensurate formation of two blisters on the opposite surfaces denoted as *Segments 2* (**S2**) and *4* (**S4**); (3) symmetric opening of film (**124**) over large area with a large area laser beam by two thin cavities (**32, 54**) at the first and last interference fringe positions ((**24, 30**) in **Figure 12(a)** for (**118**)), and commensurate formation of two blisters on the opposite surfaces denoted as *segments 1* (**S1**) and *5* (**S5**); and (4) symmetric opening of film (**126**) over large area with adjacent laser pulses (**116**) into two thin cavities (**32, 54**) at the first and last interference fringe positions ((**24, 30**) in **Figure 12(a)** for (**116**)), and commensurate formation of an array of blisters connected with an open cavity (**32, 54**) on each of the opposite surfaces denoted as *Segments 1* (**S1**) and *5* (**S5**) to define connected buried nanochannels (**78**) or cavities and MEMs devices (**90**). It is understood that other combinations of nano-voids, blisters, and quantum-ejections are anticipated, and the structures formed will vary with the film thickness, or extend into the multilayered films and other embodiments as described herein.

In an embodiment of the present invention, **Figure 12(c)** depicts (**128**) the division of the focal interaction volume of incident laser light (**12**) into thin interaction zones (**24, 26, 28, 30**) inside an optically transparent film (**14**) conforming to a curved, spherical, cylindrical, or non-planar substrate (**16**), as a result of the interference of Fresnel reflections of the incident light from the curved boundary interfaces (**20, 22**), together with examples in the aftermath of the laser pulse interaction, showing the formation of a perforated (**34**) blister of segment (**S1**) (**130**), the ejection of first (**S1**) and second (**S2**) segments (**132**) commensurate with formation of a perforated (**34**) blister at the third segment (**S3**), and ejection of the first segment (**S1**) (**134**) commensurate with the formation of a closed blister at the second segment (**S2**), defining analogous representations of the structures shown in **Figures 1(d)**, **1(h)**, and **1(e)**, respectively. It is understood that other combinations of nano-voids, blisters, and quantum-ejections are anticipated, forming into structures with various shapes and varying number as the film thickness is changed, or extending into the multilayered films and other embodiments as described herein.

In another embodiment of the invention, **Figure 13** depicts the division of the focal interaction volume of incident laser light (**12**) into thin interaction zones (**24, 26, 28, 30**) at the bright fringe patterns (**18**) inside a transparent liquid or gel or material (**136**) filling a well or channel or reservoir (**138**) or V-channel (**140**) in a substrate (**16**) as a result of the interference of Fresnel reflections of the incident light (**12**) from the boundary interfaces (**20, 22**). In the immediate aftermath of the laser pulse interaction are shown the localization of dissipated laser energy aligned with the high intensity interference zones as formed by the Fresnel reflections above a threshold for material modification, together with the following depictions: (1) the opening of the liquid or gel (**142**) by a thin cavity (**36**) at the second interaction interference fringe position (**26**), and commensurate ejection of a controlled volume of liquid or gel arising from a volume *segment 1* (**S1**) by the momentum transfer from the expanding thin cavity (**36**); (2) the ejection of a two controlled volumes of liquid or gel (**144**) arising respectively from two volumes in the well denoted as *segment 1* (**S1**) and *2* (**S2**); and (3) the opening of the liquid or gel (**146**) by a thin cavity (**32**) at the first interaction interference fringe position (**24**) for the liquid or gel (**136**) in the V-shaped channel (**140**) configured to form interference fringes(**18**). The laser processing of such material (**136**) from wells of various geometric shapes is anticipated to deliver controllable amounts of drugs, biological material, analytes, or nanoparticles to a second substrate (not shown) by such ejection or catapulting from the expanding nanovoids (**32, 36, 38, 54, 40**), or be applied in printing to advantageously eject a controlled amount of ink or dye, or form controlled volumes of nanocavities.

The embodiments of the present invention presented thus far had inferred the laser beam to be applied at normal incidence to the film structures. In another embodiment, the laser beam is applied at an angle to the surface, variable from grazing ($\theta_i = 90°$ from normal incidence) to normal ($\theta_i = 0°$). An increasing angle will extend the beam area and will also vary angle of propagation in each of the various layers following according to the Snell's Law of refraction, and thus provide advantageous means to tune the fringe-to-fringe spacing of laser interaction zones inside each film layer according to $\lambda/2n_j \cos\theta_j$, where $\theta_j$ is the angle of propagation of the light beam in layer *j* with respect to the interface normal. Alternatively, the laser wavelength may be tuned or changed for tuning this fringe-to-fringe spacing and the observed segment thickness has closely followed the $\lambda/2n_j$ fringe spacing for normal incidence with 522, 800, and 1044 nm wavelengths tested to date.

As a non-limiting example, **Figure 14(a)** is similar to **Figure 5a**, depicting the division of the focal interaction volume of incident laser light (**12**) into thin interaction zones formed on the fringe pattern (**18**) inside a free standing transparent film (**14**) as a result of the interference of Fresnel reflections of the incident light from the boundary interfaces (**20, 64**). Optical ray trajectories (**148**) of the incident light at normal incidence with the first interface (**20**), are shown refracted and then multi-reflected (**150**) inside the film (**14**) due to internal Fresnel reflections at normal incidence to the boundary interfaces (**20, 64**), and leading to fringe to fringe spacing of $\lambda/2n_f$ and fringes parallel with the boundary interfaces (**20, 64**).

In another non-limiting example, **Figure 14(b)** shows a modification of the case in **Figure 14(a)**, with the laser beam (**12**) now depicted arriving from a different angle, with corresponding optical ray trajectories (**152**) that are incident at angle $\theta_i$ with respect to the interface (**20**) normal (**dashed lines**). Following refraction at the first interface (**20**), the internal refracted optical rays (**154**) are then multi-reflected (**156, 158**) inside the film (**14**) due to Fresnel reflections at the boundary interfaces (**20, 64**), propagating at the refraction angle, $\theta$, with respect to the interface (**20, 64**) normals (**dashed lines**), and leading to a modified interference pattern (**160**) with fringe to fringe spacing of $\lambda/2n_f\cos\theta$ while retaining interference fringes aligned parallel with the boundary interfaces (**20, 64**).

The present invention anticipates the delivery of multiple beams to overlap at a processing position inside a material, and thus combine to form into interference patterns that are controlled according to the different wavelengths of the incoming beams and/or different angles of incidence of the incoming beams and/or different entrance positions of the incoming beams. In this way, a skillful practitioner in optics may enhance and diminish specific fringes in the overall interference pattern to preferentially drive the thin zone laser interaction at any one or any combination of selected fringe positions. In an embodiment of the present invention, the laser beam may be applied from either side of the film or multi-layer structure. Alternatively, laser beams may be directed to the structure from opposite sides of the film structure to arrive synchronized or with time delays. (i.e. from both top and bottom directions in **Figures 1, 5, 6, 12, or 13**). An embodiment of the present invention includes interference laser processing of a material or device that is positioned inside a Fabry Perot cavity to take advantage of high contrasting interference fringes from the Fabry Perot to drive strong thin laser interaction zones in the material that may otherwise be of insufficient contrast if only generated from the material boundaries. A related embodiment includes the application of a single mirror or reflector together with the sample that in combination creates an interference pattern of the laser beam in which to create strong thin laser interaction zones inside the material.

In a non-limiting example, **Figure 14(c)** presents the same elements of **Figure 14(b)**, with the addition of a second laser beam (**162**) depicted arriving from below the film (**14**) at a different angle from the first beam (**12**), with corresponding optical ray trajectories (**166**) that are incident at angle $\phi_i$ with respect to the interface (**64**) normal (**dashed lines**). Following refraction from the bottom interface (**64**), the internal refracted optical rays (**168**) propagate at the refraction angle, $\phi$, with respect to the interface (**20, 64**) normals (**dashed lines**), to intercept and refract at the top interface (**20**), and exit the film (**14**) as transmitted optical rays (**170**). In the case of low Fresnel reflections at one or both of the interface boundaries (**20, 64**), the weak internal multi-reflections will result in only weakly contrasting and low visibility interference fringes to form by self-interference from either of the incident beams shown below (**162**) or above (**12**) the film (**14**). Nevertheless, the free standing transparent film (**14**) depicts the formation of a modified focal interaction volume, in the region of overlapping incident laser light beams (**12, 162**), into thin interaction zones formed on the fringe pattern (**172**) inside the film (**14**) as a result of the interference of two laser beams (**12, 162**) for the case where these two beams are made coherent with each other, for example, by using an external beam-splitting optical beam delivery system. For this case where the optical interference pattern is created 'externally', without influence of significant internal interface boundary reflections, the optical interference pattern (**172**) is modified from the cases of **Figures 14(a)** and **(b)**, showing fringe to fringe spacing of $\lambda/2n_f\cos[(\theta+\phi)/2]$ and a rotation of the interference fringes by angle $(\theta-\phi)/2$ with to respect to the boundary interfaces (**20, 64**). Hence, the invention anticipates a combination of incident coherent laser sources to offer more flexible arrangement of the so-called 'external' optical interference pattern (**172**), generated within the material, that does not rely on the internal reflections at the interface boundaries (**20, 64**) of the material.

In another non-limiting embodiment of the invention, **Figure 14(d)** combines the elements of **Figures 14(b)** and **(c)**, depicting the division of the focal interaction volume of two overlapping incident beams of laser light (**12, 162**) for the case of their mutual coherence, into an two-dimensional array of interaction zones formed on the fringe pattern (**176**) inside a free standing transparent film (**14**) as a result of the interference of the Fresnel refractions (optical rays (**154, 168**)) and reflections (optical rays (**156, 174**)) of the incident light from the boundary interfaces (**20, 64**). This two dimensional optical interference pattern may be further considered to arise from the bases of four in-plane light beams with optical ray trajectories (**154, 156, 168, 174**) that combine the elements of interference created externally (**172**) by the two coherent beams (**12**) and (**162**) and created internally (**160**) by the Fresnel reflections of the interface boundaries (**20, 64**).

The invention further anticipates the creation of small or narrow zones of laser interaction to follow on the intensity maxima of optical fringes, formed by 'either of' or 'combinations' (**Figure 14(d)**) of the 'internal' (**Figure 14(a) or (b)**) and 'external' manifestations (**Figure (c)**) of optical interference presented herein. Hence, the invention anticipates a wide variance in the available shape of such small laser interactions volumes, according to the flexible expectations known from optical interference in one-, two-, and three-dimensions. Therefore, the formation of voids, blisters, and perforated blisters, as well as the quantum ejection of segments that are now structured on laser cleaved interaction zones formed on three-dimensional surfaces, following the fringe patterns, is anticipated to follow accordingly to the optical patterns generated at flexible angles, motive shape, and variable periodicity in the material. The present invention anticipates the laser interactions to provide a wide range of surface and internally structure morphology, including mesoscopic volumes and three-dimensional lattices inside the film as well as quantum ejection of multi-dimensional segment shapes on variable trajectories and angles.

In an embodiment of the invention, the formation of interference fringes by an illuminating laser is not limited to reflection from two interface surfaces, but includes other types of optical resonators such as spheres, disks, fibers, cylinders, cones, and rings as non-limiting examples. In these various embodiments, the shape of optical interference pattern, often known as a mode of the optical resonator, is used to create small or thin zones of strong laser interactions, which, in turn, lead to formation of nano-cavities, mesoscopic volumes, blisters, and quantum-ejection zones to follow from along these interference maxima. These interaction zones can be made in flexible ways, excited preferentially to specific modes according to the laser focusing geometry into the structure. This approach offers new ways of micro- and nano-scale processing, to induce optical defects, create novel three-dimensional shapes of MEMs structures, induce nanovoids in micron sized particles, and to thin structures by quantum ejection at laser cleavage surfaces and thus size select or shape select particles.

The present invention anticipates that the optical interference may be generated in the various embodiments presented above with materials that need not be transparent, and rather be partially transparent. Thus, metals and other opaque materials are anticipated which may have advantages to increase the reflection and fringe contrast. The appropriate devices to be laser structured will have an optical penetration depth in each layer or structure in the beam path to exceed the layer thickness or size of structure, such that a round trip path of the light from a first relevant reflecting surface can propagate and return from the second or last relevant interface to thus interfere with itself and create the interference pattern in the film or film layers or resonator that underlies the present invention of interferometric laser processing. In the case of 'externally' generated interference patterns of light, a shorter optical penetration depth is anticipated, approaching a single fringe width of $\lambda/4n_f$.

A practitioner in the field of laser material processing will have a wide range of laser beam sources to apply advantageously in the present invention. Such sources include directly generated or modified laser beams, including frequency mixing to generate new or to tune the laser wavelength. The selection of laser wavelength will have significant effect on the overall laser interaction process in the present invention that includes, for example: (1) tuning of the fringe to fringe spacing in the processed material that directly controls the thickness, $\lambda/2n_f$, of removed segments, (2) variability in the underlying strength of the laser material interaction by linear and nonlinear means that is highly wavelength dependent, (3) variability in the optical absorption in the film, substrate, and all other relevant material components, (4) variability in the plasma shielding effect in each of the laser interaction zones, and (5) the focusing lens resolution limit according to optical diffraction theory. A broad range of laser wavelengths are anticipated, ranging from the 100s of $\mu$m with quantum cascade lasers to the transmission limits of high opacity in wide-bandgap materials in the vacuum ultraviolet spectrum of 100 nm.

In the present invention, the many embodiments presented for this partial and digital removal of a thin transparent film or resonator structures opens new directions in selectively texturing and surface micromachining to $\lambda/2n_f$ precision inside the film and in finely pitched patterns with less than 1 $\mu$m lateral resolution. This opens new means for marking, coloring and multilevel structuring of thin transparent films (**Figure 7, 8**). Further, the combination of this laser-direct writing of multilevel patterns with buried nanovoids or channels can be exploited as demonstrated in **Figure 7** and **8** for fabricating MEMS, optofluidic and other optical components in thin films on wafers or flexible silicon or silica or polymer foils, for example. This approach is very attractive from transforming lab-on-a-chip (LOC) devices to flexible lab-in-a-film (LIF) structures that are compatible with today's state-of-the-art manufacturing facilities for CMOS microelectronics or glass display and create novel chip-scale biosensors, minimally invasive implantable devices, portable point-of-care medical products, compact diagnostic platforms, or interactive sensor display. The present invention anticipates such laser-structured films over microelectronic chips, light sources or optical sensors, and ultrathin wafers to create epidermal biosensors in ultra-thin foldable and stretchable integrated circuits or to shape vascular-type networks into bio-implants that mimic natural structures. The formation of blisters may be used to improve packaging of delicate materials, to provide a cushioning or spacing effect to prevent direct contact between two or more surfaces, or to reduce friction between two sliding surfaces. The formation of nanovoids near electronic components such as capacitors or wires offer a means to locally vary or trim the dielectric properties, and thus serve to speed electric circuits along conductors or to trim capacitance as required in advanced microelectronic memory, processing, and optoelectronic chips, or in display technologies.

## REFERENCES

1. Küper, S. & Stuke, M. Femtosecond uv excimer laser ablation. Appl. Phys. Lett. 44, 199-204 (1987).

2. Küper, S. & Stuke, M. Process for ablation of polymer plastics using ultra-short laser pulses. *International Patent* WO 89/08529 (September 1987)(discontinued)

3. Detao Du *et al.*, Method for controlling configuration of laser induced breakdown and ablation. *US Patent* US 08/224,961 (August 1997)

4. Schermelleh, L. et al. Laser microdissection and laser pressure catapulting for the generation of chromosome-specific paint probes. BioTechniques 27, 362-367 (1999).

5. Miura, K., Qiu, J., Inouye, H., Mitsuyu, T. & Hirao, K. Photowritten optical waveguides in various glasses with ultrashort pulse laser. Appl. Phys. Lett. 71, 3329-3331 (1997).

6. Gattass, R. R. & Mazur, E. Femtosecond laser micromachining in transparent materials. Nature Photon. 2, 219-225 (2008).

7. Glezer, E. N. & Mazur, E. Ultrafast-laser driven micro-explosions in transparent materials. Appl. Phys. Lett. 71, 882-884 (1997).

8. Hill, K.O.; Fujii, Y.; Johnson, D. C.; Kawasaki, B. S., "Photosensitivity in optical fiber waveguides: application to reflection fiber fabrication". Appl. Phys. Lett., 32, 647, (1978)

9. M. Campbell, D. N. Sharp, M. T. Harrison, R. G. Denning, A. J. Turberfield, "Fabrication of photonic crystals for the visible spectrum by holographic lithography," Nature, 404(6773), 53-56 (2000)

10. McDonald, J. P., Thouless, M. D. & Yalisove, S. M. Mechanics analysis of femtosecond laser-induced blisters produced in thermally grown oxide on Si(100). J. Mater. Res. 25, 1087-1095 (2010).

11. Rublack, T., Hartnauer, S., Kappe, P., Swiatkowski, C. & Seifert, G. Selective ablation of thin SiO2 layers on silicon substrates by femto- and picosecond laser pulses. Appl. Phys. A 103, 43-50 (2011).

12. McDonald, J. P., Mistry, V. R., Ray, K. E. & Yalisove, S. M. Femtosecond pulsed laser direct write production of nano- and microfluidic channels. Appl. Phys. Lett. 88, 183113-1-183113-3 (2006).

13. Kumar, K., Lee, K. K. C., Herman, P. R., Nogami, J. & Kherani, N. P. Femtosecond laser direct hard mask writing for selective facile micron-scale inverted-pyramid patterning of silicon. Appl. Phys. Lett. 101, 222106-1-222106-5 (2012).

14. Bohandy, J., Kim, B. F. & Adrian, F. J. Metal deposition from a supported metal film using an excimer laser. J. Appl. Phys. 60, 1538-1539 (1986).

15. Westphal, G. et al. Noncontact laser catapulting: a basic procedure for functional genomics and proteomics. Meth. Enzymol. 356, 80-99 (2002).

16. Mero, M., Sabbah, A. J., Zeller, J. & Rudolph, W. Femtosecond dynamics of dielectric films in the pre-ablation regime. Appl. Phys. A 81, 317-324 (2005).

17. Mero, M. et al. On the damage behavior of dielectric films when illuminated with multiple femtosecond laser pulses. Opt. Eng. 44, 51107-1-51107-7 (2005).

18. Jasapara, J., Nampoothiri V.V. A. & Rudolph, W. Femtosecond laser pulse induced breakdown in dielectric thin films. Phys. Rev. B 63, 045117-1-045117-5 (2001).

19. Hosokawa Y, Yashiro M, Asahi T, Masuhara H, Kadota T et al. Femtosecond multistep laser etching of transparent amorphous organic film. Jpn J Appl Phys 2001; 40: L1116-L1118.

20. Hosokawa Y, Yashiro M, Asahi T, Masuhara H. Photothermal conversion dynamics in femtosecond and picosecond discrete laser etching of Cu-phthalocyanine amorphous film analysed by ultrafast UV-VIS absorption spectroscopy. J Photochem Photobiol A 2001; 142: 197-207.

21. Tull, B. R., Carey, J. E., Mazur, E., McDonald, J. P. & Yalisove, S. M. Silicon Surface Morphologies after Femtosecond Laser Irradiation. MRS Bull. 31, 626-633 (2006).

22. McDonald, J. P., McClelland, A. A., Picard, Y. N. & Yalisove, S. M. Role of a native oxide on femtosecond laser interaction with silicon (100) near the damage threshold. Appl. Phys. Lett. 86, 264103-1-264103-3 (2005).

23. Rublack, T. & Seifert, G. Femtosecond laser delamination of thin transparent layers from semiconducting substrates. Opt. Mater. Express 1, 543-550 (2011)

24. Rublack, T., Hartnauer, S., Kappe, P., Swiatkowski, C. & Seifert, G. Selective ablation of thin SiO2 layers on silicon substrates by femto- and picosecond laser pulses. Appl. Phys. A 103, 43-50 (2011).

25. Rublack, T., Schade, M., Muchow, M., Leipner, H. S. & Seifert, G. Proof of damage-free selective removal of thin dielectric coatings on silicon wafers by irradiation with femtosecond laser pulses. J. Appl. Phys. 112, 023521-1-023521-7 (212).

26. McDonald, J. P. et al. Femtosecond-laser-induced delamination and blister formation in thermal oxide films on

EP 3 024 569 B1

silicon (100). Appl. Phys. Lett. 88, 153121-1-153121-3 (2006).

27. Gamaly, E. G., Rode, A. V., Luther-Davies, B. & Tikhonchuk, V. T. Ablation of solids by femtosecond lasers: Ablation mechanism and ablation thresholds for metals and dielectrics. Phys. Plasmas 9, 949 (2002).

28. Jing, X. et al. Modeling validity of femtosecond laser breakdown in wide bandgap dielectrics. Appl. Surf. Sci. 258, 4741-4749 (2012).

29. Wang, Y. et al. Visible photoluminescence of Si clusters embedded in silicon nitride films by plasma-enhanced chemical vapor deposition. Phys. E 27, 284-289 (2005).

**Claims**

1. A method of laser induced modification of a material (14, 136), comprising:

    providing a material having a first interface (20, 70) and at least a second interface (22, 64, 72) spaced from the first interface to define a material volume (14, 138, 140),
    applying at least one laser pulse (12, 112, 114, 118, 162) to the material such that the at least one laser pulse is incident on the first interface (20) at a preselected angle of incidence (148, 152, 166),
    wherein an optical interference pattern (18, 68, 160, 172, 176) is generated from Fresnel reflections between the first interface and the at least second interface, such that a thin interaction volume (24, 26, 28, 30) at a site of at least one intensity maximum of the optical interference pattern (18) is **characterized by** a laser intensity above a threshold value to responsively produce the laser induced cleavage (32, 36, 38, 54) along the at least one intensity maximum (24, 26, 28, 30) at a site between the first interface and the at least second interface.

2. The method according to claim 1, wherein the at least one laser pulse's duration is shorter than a thermal diffusion time over a distance equal to one-half of a fringe-to-fringe separation of the optical interference pattern, said thermal diffusion time being from 100 attoseconds to 1 nanosecond,
    the laser induced modification of the material being **characterized by** a rapid temperature increase of the thin interaction volume at the site of the at least one intensity maximum and comprising any one of high-temperature modification, ablation, micro-explosion, melting, vaporization, ionization, plasma generation, electron-hole pair generation and dissociation.

3. The method according to any preceding claim wherein the material is an optical resonator capable of supporting optical resonance wherein
    the optical resonator is one of a cylindrical resonator, a disk resonator, an optical ring resonator, a spherical resonator, rectangular shaped resonator, or
    a film, wherein the film is a thin film, a thick film, a wafer, a window, a disk or an etalon.

4. The method according to claim 3, wherein the film is
    a single layered film having a second interface of the film positioned against air, vacuum, gas, liquid or plasma, or against a substrate, the substrate being any one of a solid substrate and a liquid film coating; and preferably
    a multi-layered film having at least two layers wherein the second interface of a first film is positioned against the first interface of a second film;
    the single or multi-layered film being a rigid film, or a flexible film shaped to manipulate the optical interference pattern and preferably shaped about a shaped substrate.

5. The method according to any preceding claim, wherein the material is a liquid or a gel, and the laser induced modification of the material comprises ejecting a discreetly controlled quantity of the liquid or the gel, wherein the liquid or the gel is a droplet, a layer, a sheet, a biological film, a tissue, a flowing jet, or supported by a surface adhesive or a textured substrate, or supported in a supporting cavity, the cavity being any one of a well, a hole, a channel, a reservoir, a U-channel or a V-channel.

6. The method according to any preceding claim, wherein the optical interference pattern, preferably of an etalon, comprises an interference pattern produced by an internal reflection of the at least one laser pulse or an interference pattern produced by a plurality of intersecting laser pulses intersecting substantially inside the material.

7. The method according to any preceding claim, wherein the laser induced modification of the material comprises the formation of a nanocavity or a closed blister or a perforated blister and at least a fraction of the perforated blister is ejected to form an ejected blister or a partially ejected blister.

8. The method according to any preceding claim, wherein the optical interference pattern induced in the material comprises a quantity of sites of interference maxima, wherein the laser induced modification of the material at these interference maxima is induced at multiple levels of depth,
wherein the laser induced modification of the quantity of sites can be induced at independent times depending on relative depth of each site, and wherein the at least one laser pulse's wavelength, material properties, shape or size of the material and said angle of incidence of the at least one laser pulse can be varied to manipulate the quantity of sites that occur in the material, the spacing between sites and position of sites relative to the first interface, the wavelength being within a range of 100 nanometers to 100 micrometers.

9. The method according to any preceding claim, where wherein an array of sites of laser induced modification comprises formation of one, two or three dimensional modifications, wherein
said array of sites of laser induced modification can be linked or extended into nanofluidic channels, cavities, reservoirs or a combination thereof, or
the laser induced modification of the material is **characterized by** a cross-sectional shape similar to a predetermined cross-sectional shape of the at least one laser pulse.

10. The method according to any preceding claim, wherein the laser induced modification of the material comprises a quantum ejection of material segments from the material, thereby leading to quantized depths of film removal or distinct color changes of the material, or altering surface qualities of the material for marking, texturing or patterning.

11. The method according to any preceding claim, wherein the at least one laser pulse's wavelength, material properties of the material, material's shape or size, and said angle of incidence of the at least one laser pulse can be varied to manipulate the location of the site of the at least one intensity maximum.

12. The method according to any preceding claim, wherein a spectral bandwidth or partial coherence of the at least one laser pulse generates an acceptable level of optical interference contrast.

13. The method according to any preceding claim, wherein the material is composed of one or more of the following: silica dioxide, optical glass, chalcogenide, oxynitride, magnesium fluoride, calcium fluoride, cerium fluoride, hafnium oxide, aluminum oxide, sapphire, titanium dioxide, tantalum oxide, zirconium oxide, hafnium silicate, zirconium silicate, hafnium dioxide, zirconium dioxide, HfSiON, diamond, diamond-like carbon, metal oxides, sapphire, lithium-niobate, barium titanate, strontium titanate, KDP, BBO, LBO, YAG, silicon, Ge, GaAs, InP, InN, GaN, GaPAlGaAs, InGaN, AlGaInP, SiC, BN, BP, Te, SiC, Bas, AlP, AlAs, AlSb, CdS, CdT, ZnO, PbSe, PbTe, $Cu_2O$, CuO, PET, polyethylene, polyethylene, PMMA, biopolymers, polystyrene, PEO, nylon, PDMS, polyimide, photoresists, ITO, FTO, ZnO, AZO, In-doped cadmium oxide, carbon nanotubes, poly(3,4-ethylenedioxythiophene), polyaniline, polyacetylene, polypyrrole, polythiophenes, PEDOT, PEDOT:PSS, silver, gold, chrome, titanium, nickel, tantalum, tungsten, aluminum, platinum, Paladium.

14. The method according to any preceding claim, wherein the substrate is composed of one or more of the following: silica dioxide, optical glass, chalcogenide, oxynitride, magnesium fluoride, calcium fluoride, cerium fluoride, hafnium oxide, aluminum oxide, sapphire, titanium dioxide, tantalum oxide, zirconium oxide, hafnium silicate, zirconium silicate, hafnium dioxide, zirconium dioxide, HfSiON, diamond, diamond-like carbon, metal oxides, sapphire, lithium-niobate, barium titanate, strontium titanate, KDP, BBO, LBO, YAG, silicon, Ge, GaAs, InP, InN, GaN, GaPAlGaAs, InGaN, AlGaInP, SiC, BN, BP, Te, SiC, Bas, AlP, AlAs, AlSb, CdS, CdT, ZnO, PbSe, PbTe, $Cu_2O$, CuO, PET, polyethylene, polyethylene, PMMA, biopolymers, polystyrene, PEO, nylon, PDMS, polyimide, photoresists, ITO, FTO, ZnO, AZO, In-doped cadmium oxide, carbon nanotubes, poly(3,4-ethylenedioxythiophene), polyaniline, polyacetylene, polypyrrole, polythiophenes, PEDOT, PEDOT:PSS, silver, gold, chrome, titanium, nickel, tantalum, tungsten, aluminum, platinum, Paladium.

**Patentansprüche**

1. Verfahren zur laserinduzierten Modifizierung eines Materials (14, 136), umfassend:

Bereitstellen eines Materials mit einer ersten Grenzfläche (20, 70) und wenigstens einer zweiten Grenzfläche (22, 64, 72), die von der ersten Grenzfläche beabstandet ist, um ein Materialvolumen (14, 138, 140) zu definieren,

Aufbringen wenigstens eines Laserpulses (12, 112, 114, 118, 162) auf das Material, so dass der wenigstens eine Laserpuls unter einem vorab ausgewählten Einfallswinkel (148, 152, 166) auf die erste Grenzfläche (20) trifft,

wobei ein optisches Interferenzmuster (18, 68, 160, 172, 176) anhand von Fresnel-Reflexionen zwischen der ersten Grenzfläche und der wenigstens zweiten Grenzfläche erzeugt wird, so dass ein dünnes Wechselwirkungsvolumen (24, 26, 28, 30) an einer Stelle von wenigstens einem Intensitätsmaximum des optischen Interferenzmusters (18) durch eine Laserintensität oberhalb eines Schwellenwertes gekennzeichnet ist, um als Antwort die laserinduzierte Spaltung (32, 36, 38, 54) entlang des wenigstens einen Intensitätsmaximums (24, 26, 28, 30) an einer Stelle zwischen der ersten Grenzfläche und der wenigstens zweiten Grenzfläche zu erzeugen.

2. Verfahren nach Anspruch 1, wobei die Zeitspanne des wenigstens einen Laserpulses kürzer ist als eine Wärmediffusionszeit über eine Strecke, die einer Hälfte einer Streifen-zu-Streifen-Trennung des optischen Interferenzmusters entspricht, wobei die Wärmediffusionszeit 100 Attosekunden bis 1 Nanosekunde beträgt,

die laserinduzierte Modifizierung des Materials durch einen schnellen Temperaturanstieg des dünnen Wechselwirkungsvolumens an der Stelle des wenigstens einen Intensitätsmaximums gekennzeichnet ist und

jedes beliebige von Hochtemperaturmodifizierung, Ablation, Mikroexplosion, Schmelzen, Verdampfen, Ionisierung, Plasmaerzeugung, Erzeugung von Elektron-Loch-Paaren und Dissoziation umfasst.

3. Verfahren nach einem beliebigen der vorhergehenden Ansprüche, wobei das Material ein optischer Resonator ist, der optische Resonanz unterstützen kann, wobei

der optische Resonator einer von einem zylindrischen Resonator, einem Scheibenresonator, einem optischen Ringresonator, einem sphärischen Resonator, einem rechteckigen Resonator oder

einem Film ist, wobei der Film ein Dünnfilm, ein Dickfilm, ein Wafer, ein Fenster, eine Scheibe oder ein Etalon ist.

4. Verfahren nach Anspruch 3, wobei der Film

ein einschichtiger Film ist, wobei eine zweite Grenzfläche des Films gegen Luft, Vakuum, Gas, Flüssigkeit oder Plasma oder gegen ein Substrat positioniert ist, wobei das Substrat ein beliebiges von einem festen Substrat oder einer flüssigen Filmbeschichtung ist; und vorzugsweise

eine mehrschichtiger Film mit wenigstens zwei Schichten ist, wobei die zweite Grenzfläche eines ersten Films gegen die erste Grenzfläche eines zweiten Films positioniert ist;

wobei der ein- oder mehrschichtige Film ein starrer Film oder ein flexibler Film ist, der geformt ist, um auf das optische Interferenzmuster einzuwirken, und der vorzugsweise um ein geformtes Substrat ausgebildet ist.

5. Verfahren nach einem beliebigen der vorhergehenden Ansprüche, wobei das Material eine Flüssigkeit oder ein Gel ist und die laserinduzierte Modifizierung des Materials Ausstoßen einer diskret kontrollierten Menge der Flüssigkeit oder des Gels umfasst, wobei die Flüssigkeit oder das Gel ein Tröpfchen, eine Schicht, ein Blatt, ein biologischer Film, ein Gewebe, ein fließender Strahl ist oder von einer haftenden Oberfläche oder einem strukturierten Substrat getragen oder in einem tragenden Hohlraum gehalten wird, wobei der Hohlraum ein beliebiger von einem Well, einem Loch, einem Kanal, einem Reservoir, einem U-Kanal oder einem V-Kanal ist.

6. Verfahren nach einem beliebigen der vorhergehenden Ansprüche, wobei das optische Interferenzmuster, vorzugsweise eines Etalons, ein Interferenzmuster, das durch eine innere Reflexion des wenigstens einen Laserpulses erzeugt wird, oder ein Interferenzmuster umfasst, das durch mehrere sich kreuzende Laserpulse erzeugt wird, die sich im Wesentlichen innerhalb des Materials kreuzen.

7. Verfahren nach einem beliebigen der vorhergehenden Ansprüche, wobei die laserinduzierte Modifizierung des Materials Ausbilden einer Nanokavität oder einer geschlossenen Blase oder einer perforierten Blase umfasst und wenigstens ein Teil der perforierten Blase zum Ausbilden einer ausgestoßenen Blase oder einer teilweise ausgestoßenen Blase ausgestoßen wird.

8. Verfahren nach einem beliebigen der vorhergehenden Ansprüche, wobei das in dem Material induzierte optische Interferenzmuster eine Menge von Stellen von Interferenzmaxima umfasst, wobei die laserinduzierte Modifizierung des Materials bei diesen Interferenzmaxima auf einer Vielzahl von Tiefenebenen induziert wird,

wobei die laserinduzierte Modifizierung der Menge von Stellen zu unabhängigen Zeitpunkten je nach der relativen Tiefe einer jeden Stelle induziert werden kann und wobei die Wellenlänge des wenigstens einen Laserpulses, Materialeigenschaften, Form oder Größe des Materials und der Einfallswinkel des wenigstens einen Laserpulses variiert werden können, um die Menge der im Material vorkommenden Stellen, den Abstand zwischen den Stellen und die Position der Stellen relativ zur ersten Grenzfläche zu beeinflussen, wobei die Wellenlänge in einem Bereich von 100 Nanometern bis 100 Mikrometern liegt.

9. Verfahren nach einem beliebigen der vorhergehenden Ansprüche, wobei eine Anordnung von Stellen laserinduzierter Modifizierung das Ausbilden von ein-, zwei- oder dreidimensionalen Modifizierungen umfasst, wobei die Anordnung von Stellen der laserinduzierten Modifizierung zu nanofluidischen Kanälen, Hohlräumen, Reservoirs oder eine Kombination davon verknüpft oder in diese erweitert werden kann oder die laserinduzierte Modifizierung des Materials durch eine Querschnittsform gekennzeichnet ist, die einer vorbestimmten Querschnittsform des wenigstens einen Laserpulses ähnlich ist.

10. Verfahren nach einem der vorhergehenden Ansprüche, wobei die laserinduzierte Modifizierung des Materials einen Quantenausstoß von Materialsegmenten aus dem Material umfasst, wodurch quantisierte Tiefen der Filmentfernung oder deutlichen Farbänderungen des Materials oder veränderte Oberflächenqualitäten des Materials zum Markieren, Texturieren oder Mustern erreicht werden.

11. Verfahren nach einem beliebigen der vorhergehenden Ansprüche, wobei die Wellenlänge des wenigstens einen Laserpulses, die Materialeigenschaften des Materials, die Form oder Größe des Materials und der Einfallswinkel des wenigstens einen Laserpulses variiert werden können, um den Ort der Stelle des wenigstens einen Intensitätsmaximums zu beeinflussen.

12. Verfahren nach einem beliebigen der vorhergehenden Ansprüche, wobei eine spektrale Bandbreite oder teilweise Kohärenz des wenigstens einen Laserpulses einen akzeptablen Pegel des optischen Interferenzkontrasts erzeugt.

13. Verfahren nach einem beliebigen der vorhergehenden Ansprüche, wobei das Material aus einem oder mehreren der folgenden besteht: Siliziumdioxid, optisches Glas, Chalkogenid, Oxynitrid, Magnesiumfluorid, Calciumfluorid, Cerfluorid, Hafniumoxid, Aluminiumoxid, Saphir, Titandioxid Tantaloxid, Zirkoniumoxid, Hafniumsilikat, Zirkonsilikat, Hafniumdioxid, Zirkondioxid, HfSiON, Diamant, diamantähnlicher Kohlenstoff, Metalloxide, Saphir, Lithiumniobat, Bariumtitanat, Strontiumtitanat, KDP, BBO, LBO, YAG, Silizium, Ge, GaAs, InP, InN, GaN, GaPAIGaAs, InGaN, AlGaInP, SiC, BN, BP, Te, SiC, Bas, AIP, AlAs, AlSb, CdS, CdT, ZnO, PbSe, PbTe, $CU_2O$ CuO, PET, Polyethylen, Polyethylen, PMMA, Biopolymere, Polystyrol, PEG, Nylon, PDMS, Polyimid, Photoresists, ITO, FTO, ZnO, AZO, In-dotiertes Cadmiumoxid, Kohlenstoffnanoröhren, Poly(3,4-ethylendioxythiophen), Polyanilin, Polyacetylen, Polypyrrol, Polythiophen, PEDOT, PEDOT:PSS, Silber, Gold, Chrom, Titan, Nickel, Tantal, Wolfram, Aluminium, Platin, Paladium.

14. Verfahren nach einem beliebigen der vorhergehenden Ansprüche, wobei das Substrat aus einem oder mehreren der folgenden besteht: Siliziumdioxid, optisches Glas, Chalkogenid, Oxynitrid, Magnesiumfluorid, Calciumfluorid, Cerfluorid, Hafniumoxid, Aluminiumoxid, Saphir, Titandioxid Tantaloxid, Zirkoniumoxid, Hafniumsilikat, Zirkonsilikat, Hafniumdioxid, Zirkondioxid, HfSiON, Diamant, diamantähnlicher Kohlenstoff, Metalloxide, Saphir, Lithiumniobat, Bariumtitanat, Strontiumtitanat, KDP, BBO, LBO, YAG, Silizium, Ge, GaAs, InP, InN, GaN, GaPAIGaAs, InGaN, AlGaInP, SiC, BN, BP, Te, SiC, Bas, AIP, AlAs, AlSb, CdS, CdT, ZnO, PbSe, PbTe, $CU_2O$ CuO, PET, Polyethylen, Polyethylen, PMMA, Biopolymere, Polystyrol, PEG, Nylon, PDMS, Polyimid, Photoresists, ITO, FTO, ZnO, AZO, In-dotiertes Cadmiumoxid, Kohlenstoffnanoröhren, Poly(3,4-ethylendioxythiophen), Polyanilin, Polyacetylen, Polypyrrol, Polythiophene, PEDOT, PEDOT:PSS, Silber, Gold, Chrom, Titan, Nickel, Tantal, Wolfram, Aluminium, Platin, Paladium.

## Revendications

1. Procédé de modification induite par laser d'un matériau (14, 136), comprenant:

la fourniture d'un matériau ayant une première interface (20, 70) et au moins une seconde interface (22, 64, 72) espacée de la première interface pour définir un volume de matériau (14, 138, 140),
l'application d'au moins une impulsion laser (12, 112, 114, 118, 162) au matériau de telle sorte que l'au moins une impulsion laser soit incidente sur la première interface (20) selon un angle d'incidence présélectionné (148, 152, 166),
dans lequel un motif d'interférence optique (18, 68, 160, 172, 176) est généré à partir de réflexions de Fresnel entre la première interface et l'au moins une seconde interface, de telle sorte qu'un volume d'interaction mince (24, 26, 28, 30) sur un site d'au moins un maximum d'intensité du motif d'interférence optique (18) soit **caractérisé par** une intensité laser supérieure à une valeur seuil pour produire en réponse le clivage induit par laser (32, 36,38, 54) le long d'au moins un maximum d'intensité (24, 26, 28, 30) sur un site situé entre la première interface et l'au moins une deuxième interface.

2. Procédé selon la revendication 1, dans lequel la durée d'au moins une impulsion laser est plus courte qu'un temps de diffusion thermique sur une distance égale à la moitié d'une distance entre franges du motif d'interférence optique, ledit temps de diffusion thermique étant compris entre 100 attosecondes et 1 nanoseconde, la modification du matériau induite par laser étant **caractérisée par** une augmentation rapide de la température du volume d'interaction mince sur le site de l'au moins un maximum d'intensité et comprenant l'une quelconque d'une modification à haute température, d'une ablation, d'une micro-explosion, d'une fusion, d'une vaporisation, d'une ionisation, d'une génération de plasma, d'une génération de paires électron-trou et d'une dissociation.

3. Procédé selon l'une quelconque des revendications précédentes, dans lequel le matériau est un résonateur optique capable de supporter une résonance optique, dans lequel le résonateur optique est un résonateur choisi parmi un résonateur cylindrique, un résonateur à disque, un résonateur en anneau optique, un résonateur sphérique, un résonateur de forme rectangulaire ou un film, le film étant un film mince, un film épais, une plaquette, une fenêtre, un disque ou un étalon.

4. Procédé selon la revendication 3, dans lequel le film est:

   un film monocouche dont une seconde interface est positionnée contre l'air, le vide, un gaz, un liquide ou un plasma, ou contre un substrat, le substrat étant l'un quelconque d'un substrat solide et d'un revêtement de film liquide; et de préférence
   un film multicouche ayant au moins deux couches, la seconde interface d'un premier film étant positionnée contre la première interface d'un second film;
   le film mono- ou multicouche étant un film rigide ou un film souple mis en forme pour manipuler le motif d'interférence optique et de préférence mis en forme autour d'un substrat mis en forme.

5. Procédé selon l'une quelconque des revendications précédentes, dans lequel le matériau est un liquide ou un gel, et la modification du matériau induite par laser comprend l'éjection d'une quantité discrètement commandée du liquide ou du gel, le liquide ou le gel étant une gouttelette, une couche, une feuille, un film biologique, un tissu, un jet fluide ou supporté par un adhésif de surface ou un substrat texturé, ou supporté dans une cavité de support, la cavité étant l'un quelconque d'un puits, d'un trou, d'un canal, d'un réservoir, d'un canal en U ou d'un canal en V.

6. Procédé selon l'une quelconque des revendications précédentes, dans lequel le motif d'interférence optique, de préférence d'un étalon, comprend un motif d'interférence produit par une réflexion interne de l'au moins une impulsion laser ou un motif d'interférence produit par une pluralité d'impulsions laser se coupant sensiblement à l'intérieur. le matériel.

7. Procédé selon l'une quelconque des revendications précédentes, dans lequel la modification du matériau induite par laser comprend la formation d'une nanocavité ou d'une bulle fermée ou d'une bulle perforée et au moins une fraction de la bulle perforée est éjectée pour former une bulle éjectée ou partiellement éjectée.

8. Procédé selon l'une quelconque des revendications précédentes, dans lequel le motif d'interférence optique induit dans le matériau comprend une quantité de sites de maxima d'interférence, dans lequel la modification induite par laser du matériau à ces maxima d'interférence est induite à plusieurs niveaux de profondeur, dans lequel la modification induite par laser de la quantité de sites peut être induite à des moments indépendants en fonction de la profondeur relative de chaque site, et dans lequel la longueur d'onde de l'au moins une impulsion laser, les propriétés du matériau, la forme ou la taille du matériau et ledit angle d'incidence de l'au moins une impulsion laser pouvant être modifiées pour manipuler la quantité de sites qui se produisent dans le matériau, l'espacement entre les sites et la position des sites par rapport à la première interface, la longueur d'onde étant comprise entre 100 nanomètres et 100 micromètres.

9. Procédé selon l'une quelconque des revendications précédentes, dans lequel un réseau de sites de modification induite par laser comprend la formation de modifications à une, deux ou trois dimensions, dans lequel

ledit réseau de sites de modification induite par laser peut être lié ou étendu dans des canaux, des cavités, des réservoirs nanofluidiques ou une combinaison de ceux-ci, ou

la modification du matériau induite par laser est **caractérisée par** une forme en coupe transversale similaire à une forme en coupe transversale prédéterminée de l'au moins une impulsion laser.

10. Procédé selon l'une quelconque des revendications précédentes, dans lequel la modification du matériau induite par laser comprend une éjection quantique de segments de matériau à partir du matériau, conduisant ainsi à des profondeurs quantifiées d'enlèvement de film ou à des changements de couleur distincts du matériau, ou modifiant les qualités de surface du matériau. à des fins de marquage, de texturation ou de création de motifs.

11. Procédé selon l'une quelconque des revendications précédentes, dans lequel la longueur d'onde de l'au moins une impulsion laser, les propriétés matérielles du matériau, la forme ou la taille du matériau et ledit angle d'incidence de l'au moins une impulsion laser peuvent être modifiés pour manipuler l'emplacement du site de l'au moins un maximum d'intensité.

12. Procédé selon l'une quelconque des revendications précédentes, dans lequel une largeur de bande spectrale ou une cohérence partielle de la au moins une impulsion laser génère un niveau acceptable de contraste d'interférence optique.

13. Procédé selon l'une quelconque des revendications précédentes, dans lequel le matériau est composé d'un ou plusieurs des éléments suivants: dioxyde de silice, verre optique, chalcogénure, oxynitrure, fluorure de magnésium, fluorure de calcium, fluorure de cérium, oxyde de hafnium, oxyde d'aluminium, saphir, dioxyde de titane , oxyde de tantale, oxyde de zirconium, silicate de hafnium, silicate de zirconium, dioxyde de hafnium, dioxyde de zirconium, HfSiON, diamant, carbone sous forme de diamant amorphe, oxydes métalliques, saphir, niobate de lithium, titanate de baryum, titanate de strontium, KDP, BBO, YAB , silicium, Ge, GaAs, InP, InN, GaN, GaPAlGaAs, InGaN, AlGaInP, SiC, BN, BP, Te, SiC, BAs, AIP, AlAs, AlSb, CdS, CdT, ZnO, PbSe, PbTe, $Cu_2O$, CuO, PET, polyéthylène, polyéthylène, PMMA, biopolymères, polystyrène, PEG, nylon, PDMS, polyimide, résine photosensible, ITO, FTO, ZnO, AZO, oxyde de cadmium In-dopé, nanotubes de carbone, poly (3,4-éthylènedioxythiophène), polyaniline, polyacétylène, polypyrrole, polythiophènes, PEDOT, PEDOT: PSS, argent, or, chrome, titane, nickel, tantale, tungstène, aluminium, platine, palladium.

14. Procédé selon l'une quelconque des revendications précédentes, dans lequel le substrat est composé d'un ou plusieurs des éléments suivants: dioxyde de silice, verre optique, chalcogénure, oxynitrure, fluorure de magnésium, fluorure de calcium, fluorure de cérium, oxyde de hafnium, oxyde d'aluminium, saphir, dioxyde de titane , oxyde de tantale, oxyde de zirconium, silicate de hafnium, silicate de zirconium, dioxyde de hafnium, dioxyde de zirconium, HfSiON, diamant, carbone sous forme de diamant amorphe, oxydes métalliques, saphir, niobate de lithium, titanate de baryum, titanate de strontium, KDP, BBO, YAB , silicium, Ge, GaAs, InP, InN, GaN, GaPAlGaAs, InGaN, AlGaInP, SiC, BN, BP, Te, SiC, BAs, AIP, AlAs, AlSb, CdS, CdT, ZnO, PbSe, PbTe, $Cu_2O$, CuO, PET, polyéthylène, polyéthylène, PMMA, biopolymères, polystyrène, PEG, nylon, PDMS, polyimide, résine photosensible, ITO, FTO, ZnO, AZO, oxyde de cadmium In-dopé, nanotubes de carbone, poly (3,4-éthylènedioxythiophène), polyaniline, polyacétylène, polypyrrole, polythiophènes, PEDOT, PEDOT: PSS, argent, or, chrome, titane, nickel, tantale, tungstène, aluminium, platine, palladium.

Figure 1

Figure 2

Figure 3

Figure 4

Figure 5

Figure 6

EP 3 024 569 B1

Figure 7

Figure 8

EP 3 024 569 B1

Figure 9

Figure 10

Figure 11

EP 3 024 569 B1

Figure 12

Figure 13

Figure 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002046994 A
- WO 8908529 A
- US 08224961 B


**Non-patent literature cited in the description**

- **KÜPER, S. ; STUKE, M.** Femtosecond uv excimer laser ablation. *Appl. Phys. Lett.,* 1987, vol. 44, 199-204
- **SCHERMELLEH, L. et al.** Laser microdissection and laser pressure catapulting for the generation of chromosome-specific paint probes. *BioTechniques,* 1999, vol. 27, 362-367
- **MIURA, K. ; QIU, J. ; INOUYE, H. ; MITSUYU, T. ; HIRAO, K.** Photowritten optical waveguides in various glasses with ultrashort pulse laser. *Appl. Phys. Lett.,* 1997, vol. 71, 3329-3331
- **GATTASS, R. R. ; MAZUR, E.** Femtosecond laser micromachining in transparent materials. *Nature Photon,* 2008, vol. 2, 219-225
- **GLEZER, E. N. ; MAZUR, E.** Ultrafast-laser driven micro-explosions in transparent materials. *Appl. Phys. Lett.,* 1997, vol. 71, 882-884
- **HILL, K.O. ; FUJII, Y. ; JOHNSON, D. C. ; KAWASAKI, B. S.** Photosensitivity in optical fiber waveguides: application to reflection fiber fabrication. *Appl. Phys. Lett.,* 1978, vol. 32, 647
- **M. CAMPBELL ; D. N. SHARP ; M. T. HARRISON ; R. G. DENNING ; A. J. TURBERFIELD.** Fabrication of photonic crystals for the visible spectrum by holographic lithography. *Nature,* 2000, vol. 404 (6773), 53-56
- **MCDONALD, J. P. ; THOULESS, M. D. ; YALISOVE, S. M.** Mechanics analysis of femtosecond laser-induced blisters produced in thermally grown oxide on Si(100). *J. Mater. Res.,* 2010, vol. 25, 1087-1095
- **RUBLACK, T. ; HARTNAUER, S. ; KAPPE, P. ; SWIATKOWSKI, C. ; SEIFERT, G.** Selective ablation of thin SiO2 layers on silicon substrates by femto- and picosecond laser pulses. *Appl. Phys. A,* 2011, vol. 103, 43-50
- **MCDONALD, J. P. ; MISTRY, V. R. ; RAY, K. E ; YALISOVE, S. M.** Femtosecond pulsed laser direct write production of nano- and microfluidic channels. *Appl. Phys. Lett.,* 2006, vol. 88, 183113-1, 183113-3
- **KUMAR, K. ; LEE, K. K. C. ; HERMAN, P. R. ; NOGAMI, J. ; KHERANI, N. P.** Femtosecond laser direct hard mask writing for selective facile micron-scale inverted-pyramid patterning of silicon. *Appl. Phys. Lett.,* 2012, vol. 101, 222106-1, 222106-5
- **BOHANDY, J. ; KIM, B. F. ; ADRIAN, F. J.** Metal deposition from a supported metal film using an excimer laser. *J. Appl. Phys.,* 1986, vol. 60, 1538-1539
- **WESTPHAL, G. et al.** Noncontact laser catapulting: a basic procedure for functional genomics and proteomics. *Meth. Enzymol.,* 2002, vol. 356, 80-99
- **MERO, M. ; SABBAH, A. J. ; ZELLER, J. ; RUDOLPH, W.** Femtosecond dynamics of dielectric films in the pre-ablation regime. *Appl. Phys. A,* 2005, vol. 81 (317-324
- **MERO, M. et al.** On the damage behavior of dielectric films when illuminated with multiple femtosecond laser pulses. *Opt. Eng.,* 2005, vol. 44, 51107-1, 51107-7
- **JASAPARA, J. ; NAMPOOTHIRI V.V. A. ; RUDOLPH, W.** Femtosecond laser pulse induced breakdown in dielectric thin films. *Phys. Rev. B,* 2001, vol. 63, 045117-1, 045117-5
- **HOSOKAWA Y ; YASHIRO M ; ASAHI T ; MASUHARA H ; KADOTA T et al.** Femtosecond multistep laser etching of transparent amorphous organic film. *Jpn J Appl Phys,* 2001, vol. 40, L1116-L1118
- **HOSOKAWA Y ; YASHIRO M ; ASAHI T ; MASUHARA H.** Photothermal conversion dynamics in femtosecond and picosecond discrete laser etching of Cu-phthalocyanine amorphous film analysed by ultrafast UV-VIS absorption spectroscopy. *J Photochem Photobiol A,* 2001, vol. 142, 197-207
- **TULL, B. R. ; CAREY, J. E. ; MAZUR, E. ; MCDONALD, J. P. ; YALISOVE, S. M.** Silicon Surface Morphologies after Femtosecond Laser Irradiation. *MRS Bull,* 2006, vol. 31, 626-633

- **MCDONALD, J. P. ; MCCLELLAND, A. A. ; PICARD, Y. N. ; YALISOVE, S. M.** Role of a native oxide on femtosecond laser interaction with silicon (100) near the damage threshold. *Appl. Phys. Lett.,* 2005, vol. 86, 264103-1, 264103-3
- **RUBLACK, T. ; SEIFERT, G.** Femtosecond laser delamination of thin transparent layers from semiconducting substrates. *Opt. Mater. Express,* 2011, vol. 1, 543-550
- **RUBLACK, T. ; SCHADE, M. ; MUCHOW, M. ; LEIPNER, H. S. ; SEIFERT, G.** Proof of damage-free selective removal of thin dielectric coatings on silicon wafers by irradiation with femtosecond laser pulses. *J. Appl. Phys.,* vol. 112 (212), 023521-1, 023521-7
- **MCDONALD, J. P. et al.** Femtosecond-laser-induced delamination and blister formation in thermal oxide films on silicon (100). *Appl. Phys. Lett.,* 2006, vol. 88, 153121-1, 153121-3
- **GAMALY, E. G. ; RODE, A. V. ; LUTHER-DAVIES, B. ; TIKHONCHUK, V. T.** Ablation of solids by femtosecond lasers: Ablation mechanism and ablation thresholds for metals and dielectrics. *Phys. Plasmas,* 2002, vol. 9, 949
- **JING, X. et al.** Modeling validity of femtosecond laser breakdown in wide bandgap dielectrics. *Appl. Surf. Sci.,* 2012, vol. 258, 4741-4749
- **WANG, Y. et al.** Visible photoluminescence of Si clusters embedded in silicon nitride films by plasma-enhanced chemical vapor deposition. *Phys. E,* 2005, vol. 27, 284-289